(19) Europäisches Patentamt
European Patent Office
Office européen des brevets

(11) EP 4 536 463 B1

(12) **EUROPEAN PATENT SPECIFICATION**

(45) Date of publication and mention of the grant of the patent:
**13.05.2026 Bulletin 2026/20**

(21) Application number: **23736827.9**

(22) Date of filing: **06.06.2023**

(51) International Patent Classification (IPC):
***B29C 48/00*** $^{(2019.01)}$ ***C08L 23/04*** $^{(2006.01)}$
***C08L 23/08*** $^{(2025.01)}$ ***C08L 23/06*** $^{(2006.01)}$

(52) Cooperative Patent Classification (CPC):
(C-Sets available)
**C08L 23/0815; B29C 48/0018; B29C 48/0022; B29C 48/022; B29C 48/05; B29C 48/08; B29C 48/10; B29C 48/625; B29C 48/66; B29C 48/914; B29C 48/92; C08L 23/04; C08L 23/06** (Cont.)

(86) International application number:
**PCT/IB2023/055827**

(87) International publication number:
**WO 2023/238032 (14.12.2023 Gazette 2023/50)**

(54) **PROCESS TO PREPARE THERMOPLASTIC COMPOSITIONS COMPRISING FLUORINE FREE POLYMER PROCESSING AIDS**

VERFAHREN ZUR HERSTELLUNG VON THERMOPLASTISCHEN POLYMERMISCHUNGEN ENTHALTEND FLUORFREIE VERARBEITUNGSHILFSMITTEL

PROCÉDÉ POUR LA PRÉPARATION TO COMPOSITIONS THERMOPLASTIQUES CONTENANT DES AUXILIAIRES DE TRAITEMENT DE POLYMÈRES EXEMPTS DE FLUOR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.06.2022 US 202263350996 P**

(43) Date of publication of application:
**16.04.2025 Bulletin 2025/16**

(60) Divisional application:
**25190786.1 / 4 674 909**

(73) Proprietor: **Nova Chemicals (International) S.A.**
**1700 Fribourg (CH)**

(72) Inventors:
- **TAYLOR, Jared**
  **Calgary, Alberta T2Y 2Z5 (CA)**
- **WANG, Jun**
  **Guangzhou, Guangdong 511453 (CN)**
- **TIKUISIS, Tony**
  **Calgary, Alberta T2M 2T7 (CA)**

(74) Representative: **Mewburn Ellis LLP**
**Aurora Building**
**Counterslip**
**Bristol BS1 6BX (GB)**

(56) References cited:
**EP-A1- 1 600 475 US-B2- 10 982 079**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/06, C08L 77/00, C08L 67/04;**
**C08L 23/0815, C08L 77/00, C08L 67/04**

## Description

### TECHNICAL FIELD

The present disclosure relates to processing aids for the extrusion of thermoplastic polyolefins and works well in the absence of fluorinated alkene based fluoropolymers.

### BACKGROUND ART

During the extrusion of polyolefin polymers surface defects may occur including those referred to as sharkskin, snakeskin and orange peel, and each type of surface defect is generally related to the rheology of the polymer melt. A particularly severe form of surface defect which may occur is "melt fracture" which is believed to result when the shear rate at the surface of the polyolefin polymer is sufficiently high that the surface of the polymer begins to fracture. That is, there is a slippage of the surface of the extruded polymer relative to the body of the polymer melt. The surface generally cannot flow fast enough to keep up with the body of the extrudate and a fracture in the melt occurs resulting in a severe loss of surface properties for the extrudate polymer.

U.S. Pat. No. 3,125,547 discloses blends of polyethylene and small amounts of fluoropolymers to provide a smooth surface on a polyethylene extrudate at high extrusion speeds.

U.S. Pat. No. 3,222,314 discloses blends of polyethylene and low molecular weight polyethylene glycol to provide heat sealable film which is suitable for printing.

U.S. Pat. No. 4,013,622 teaches the use of low molecular weight polyethylene glycol to reduce the incidence of "breakdowns" during the manufacture of polyethylene film. Similarly, U.S. Pat. No. 4,540,538 teaches that pinstriping may be reduced during the extrusion of a polyolefin into film by the use of a combination of (i) a polyethylene glycol; (ii) a hindered phenolic antioxidant; and (iii) a selected inorganic antiblock material.

Further patents relate to the use of a combination of polyalkylene oxides and fluorocarbon polymers as a processing aid in extrusion of polyolefins. These patents include U.S. Pat. No. 4,855,360 which discloses and claims a composition of matter comprising the polyolefin and the processing aid and U.S. Pat. No. 5,015,693 which claims the processing aid per se. These patents demonstrate the use of relatively low molecular weight polyethylene glycols (e.g. having molecular weights of from about 400 Da to about 20,000 Da) in combination with fluorocarbon polymers as polymer processing aids and further, that in the absence of the fluoropolymer these polyethylene glycols were not very effective at reducing melt defects.

U.S. Pat. No. 6,294,604 describes the use of a combination of a fluoropolymer, a polyethylene glycol, and magnesium oxide as a polymer processing additive package.

U.S. Pat. No. 5,986,005 describes the use of a combination of an elastomeric fluoropolymer and a polyamide/polyether block copolymer for use as a polymer processing aid.

U.S. Pat. No. 6,894,118 discloses a polymer processing aid which is a combination of a fluoropolymer and a polycaprolactone having a number average molecular weight, Mn of from 2,000 to 10,000.

U.S. Pat. No. 7,449,520 discloses the use of polycaprolactone, which is a polyester polymer, as an interfacial agent, in combination with a fluoropolymer processing aid. The extrusion of melt processable polymers comprising a fluoropolymer processing aid having a weight average particle size of greater than 2 microns is disclosed.

Fluoroelastomers and fluoropolymers are expensive materials so there is an economic incentive to avoid their use. Further, perfluorinated alkanes and perfluorinated surfactant compounds, such as for example, perfluoroctane sulfonate and perfluorooctanoic acid, which are used during the production of fluoropolymers, are increasingly being recognized for possible negative environmental impacts.

In U.S. Pat. Appl. No. 2005/0070644, we disclosed that high molecular weight polyethylene glycol, in particular PEG having a molecular weight of greater than 20,000 g/mol, reduces melt fracture during polyolefin extrusions in the absence of fluoropolymers.

U.S. Pat. No. 10,982,079 also details the performance of polymer processing aids in the absence of added fluoropolymers. The polymer processing aid comprises a high molecular weight polyethylene glycol which has improved thermal stability by virtue of the inclusion of a metal salt of a carboxylic acid, a sulfonic acid, or an alkyl sulfate.

European patent application EP 1600475 A1 discloses the use of a thermoplastic composition, preferably comprising linear low density polyethylene, and comprising a polyether-block copolyimide as an additive for densification and sintering respectively in rotomolding processes.

### SUMMARY OF INVENTION

We now report that, the use of a block copolymer having polyamide blocks and polyether blocks, together with a polycaprolactone works well as a polymer processing aid during the extrusion of thermoplastic polyolefins in the absence

of fluoropolymer processing aids.

The present disclosure provides a useful alternative to fluorinated alkene based polymer processing aids.

An embodiment is a process for preparing a thermoplastic composition extrudate, the process comprising extruding a thermoplastic composition in a melt extrusion process; the thermoplastic composition comprising: i) a linear polyethylene; ii) from 200 to 4,000 parts per million (based on the weight the linear polyethylene) of a poly(ether-block-amide) copolymer; and iii) from 200 to 4,000 parts per million (based on the weight of the linear polyethylene) of a polycaprolactone polymer; wherein the linear polyethylene is selected from the group consisting of LLDPE, MDPE, VLDPE, HDPE, and mixtures thereof; wherein the poly(ether-block-amide) copolymer comprises polyamide blocks and polyether blocks; wherein the thermoplastic composition is substantially free of fluoropolymers; and wherein the melt extrusion process is carried out in the absence of fluoropolymers.

An embodiment is a process for preparing a thermoplastic composition extrudate, the process comprising extruding a thermoplastic composition in a melt extrusion process; the thermoplastic composition comprising: i) a linear polyethylene; ii) from 200 to 4,000 parts per million (based on the weight the linear polyethylene) of a poly(ether-block-amide) copolymer; iii) from 200 to 4,000 parts per million (based on the weight of the linear polyethylene) of a polycaprolactone polymer; and iv) from 200 to 4,000 parts per million (based on the weight of the linear polyethylene) of a polyethylene glycol; wherein the linear polyethylene is selected from the group consisting of LLDPE, MDPE, VLDPE, HDPE, and mixtures thereof; wherein the poly(ether-block-amide) copolymer comprises polyamide blocks and polyether blocks; wherein the thermoplastic composition is substantially free of fluoropolymers; and wherein the melt extrusion process is carried out in the absence of fluoropolymers.

An embodiment is a process for preparing a thermoplastic composition extrudate, the process comprising: a) preparing a thermoplastic composition by combining a linear polyethylene with 200 to 4000 parts per million of at least one poly(ether-block-amide) copolymer (based on the weight of the linear polyethylene), and 200 to 4,000 parts per million (based on the weight of the linear polyethylene) of at least one polycaprolactone polymer; and b) extruding the thermoplastic composition in a melt extrusion process; wherein the linear polyethylene is selected from the group consisting of LLDPE, MDPE, VLDPE, HDPE, and mixtures thereof; wherein the at least one poly(ether-block-amide) copolymer comprises polyamide blocks and polyether blocks; wherein the thermoplastic composition is substantially free of fluoropolymers; and wherein the melt extrusion process is carried out in the absence of fluoropolymers.

An embodiment is a process for preparing a thermoplastic composition extrudate, the process comprising: a) preparing a thermoplastic composition by combining a linear polyethylene with 200 to 4000 parts per million of at least one poly(ether-block-amide) copolymer (based on the weight of the linear polyethylene), 200 to 4,000 parts per million (based on the weight of the linear polyethylene) of at least one polycaprolactone polymer and 200 to 4,000 parts per million (based on the weight of the linear polyethylene) of at least one polyethylene glycol; and b) extruding the thermoplastic composition in a melt extrusion process; wherein the linear polyethylene is selected from the group consisting of LLDPE, MDPE, VLDPE, HDPE, and mixtures thereof; wherein the at least one poly(ether-block-amide) copolymer comprises polyamide blocks and polyether blocks; wherein the thermoplastic composition is substantially free of fluoropolymers; and wherein the melt extrusion process is carried out in the absence of fluoropolymers.

In an embodiment a melt extrusion process is conducted at a shear rate which would produce a thermoplastic composition extrudate having melt fracture defects if carried out using a thermoplastic composition consisting essentially of a linear polyethylene.

In an embodiment a linear polyethylene comprises zinc oxide (ZnO).

In embodiments a linear polyethylene comprises a hydrotalcite having the formula: $[M^{2+}{}_{1-x}M^{3+}{}_{x}(OH)_2]^{x+}$ $[(A^{n-})_{x/n} \cdot mH_2O]^{x-}$ where $M^{2+}$ is divalent Mg, Ni, Zn, Cu, or Mn; $M^{3+}$ is trivalent Al, Fe, or Cr; $A^{n-}$ is an anion such as for examples, $CO_3{}^{2-}$, or $SO_4{}^{2-}$, $NO_3{}^{2-}$, $Cl^{1-}$, or $OH^{1-}$; and x is from 0.1 to 0.5.

In an embodiment a linear polyethylene comprises a hydrotalcite having the formula: $Mg_6Al_2\,(OH)_{16}CO_3 \cdot nH_2O$.

In an embodiment a linear polyethylene comprises the mineral hydrotalcite ($Mg_6Al_2\,(OH)_{16}CO_3 \cdot 4H_2O$).

In an embodiment a linear polyethylene comprises a hindered phenol primary antioxidant, and a phosphorus-containing secondary antioxidant.

In an embodiment a linear polyethylene is a LLDPE.

In an embodiment a LLDPE has a melt index, $I_2$ of from 0.1 to 5.0 grams per 10 minutes.

In an embodiment a LLDPE has a density of from 0.910 to 0.936 g/cm$^3$.

In an embodiment a LLDPE is an ethylene copolymer comprising polymerized ethylene and one or more alpha olefin selected from the group consisting of 1-butene, 1-hexene, and 1-octene.

## BRIEF DESCRIPTION OF THE FIGURES

Figure 1 shows the results of experiments (Examples 1A, 1B and 1C) which assess the ability of various polymer processing aids to clear melt extrusion defects when extruding a thermoplastic composition comprising a linear low density polyethylene (LLDPE) in a blown film line melt extrusion process. In these experiments a monolayer blown film line

equipped with a 3-inch diameter die was employed.

DESCRIPTION OF EMBODIMENTS

As used herein, the term "monomer" refers to a small molecule that may chemically react and become chemically bonded with itself or other monomers to form a polymer.

As used herein, the term "α-olefin" or "alpha-olefin" is used to describe a monomer having a linear hydrocarbon chain containing from 3 to 20 carbon atoms having a double bond at one end of the chain; an equivalent term is "linear α-olefin". An alpha-olefin may also be referred to as a comonomer.

As used herein, the terms "polyethylene" or "ethylene polymer", refers to macromolecules produced from ethylene monomers and optionally one or more additional monomers; regardless of the specific catalyst or specific process used to make the ethylene polymer. In the polyethylene art, the one or more additional monomers are often called "comonomer(s)" and typically include α-olefins. The term "homopolymer" generally refers to a polymer that contains only one type of monomer. The term "copolymer" refers to a polymer that contains two or more types of monomer. Common polyethylene types include high pressure low density polyethylene (LDPE), high density polyethylene (HDPE); medium density polyethylene (MDPE); linear low density polyethylene (LLDPE); and very low density polyethylene (VLPDE) or ultralow density polyethylene (ULPDE) which are also known as plastomers and elastomers. The term polyethylene also includes polyethylene terpolymers which may include two or more comonomers in addition to ethylene. The term polyethylene also includes combination of, or blends of, the polyethylene types described above.

The term "fluoropolymers" in the present disclosure refers to homopolymers and copolymers of fluorinated olefins. The fluorinated olefins may have a fluorine atom to carbon ratio of at least 1:2, or in some embodiments at least 1:1. Homopolymers include for example, those derived from vinylidene fluoride and vinyl fluoride. Copolymers include, for example those derived from vinylidene fluoride and one or more additional olefins, which can be fluorinated, such as for example hexafluoropropylene or non-fluorinated, such as for example propylene. Non-limiting examples of "fluoropolymers" as the term is used in the present disclosure include those described, for example, in U.S. Pat. Nos. 2,968,649; 3,051,677; 3,318,854; 5,015,693; 4,855,360; U.S. Pat. No. 5,710,217; U.S. Pat. No. 6,277,919; U.S. Pat. No. 7,375,157; and U.S. Pat. Appl. Pub. No. 2010/0311906. Some examples of commercially available fluoropolymers, include for example, copolymers of hexafluoropropylene and vinylidene fluoride which are available under the tradenames "DYNAMAR® FX 9613" and "DYNAMAR FX 9614"; and copolymers of vinylidene fluoride, tetrafluoroethylene, and hexafluoropropylene available under the tradenames "DYNAMAR FX 5911" and "DYNAMAR FX 5912". Other commercially available fluoropolymers include "VITON® A", "VITON FREEFLOW", "DAI-EL®", and "KYNAR®" all of which are available in various grades.

In the present disclosure, the terms polyalkylene oxide, poly(oxyalkylene), and polyalkylene glycol are used interchangeably. Accordingly, the terms polyethylene oxide, poly(oxyethylene), and polyethylene glycol are also used interchangeably; as are the terms polypropylene oxide, poly(oxypropylene) and polypropylene glycol.

The term "film" is used herein to mean a film having one or more layers which is formed by the extrusion of a polymer through one or more die openings. The term "film structure" is used to connote that a film has more than one layer (i.e. a film structure may have at least two layers, at least three layers, at least four layers, at least five layers, etc.).

"Alkyl group" and the prefix "alk-" are inclusive of both straight chain and branched chain groups and of cyclic groups having up to 30 carbons unless otherwise specified. Cyclic groups can be monocyclic or polycyclic and, in some embodiments, have from 3 to 10 ring carbon atoms.

The phrase "interrupted by one or more ether linkages", for example, with regard to an alkyl, alkylene, or arylalkylene refers to having part of the alkyl, alkylene, or arylalkylene on both sides of the functional group. An example of an alkylene that is interrupted with -O- is $-CH_2-CH_2-O-CH_2-CH_2-$.

The term "aryl" as used herein includes carbocyclic aromatic rings or ring systems, for example, having 1, 2, or 3 rings, optionally containing at least one heteroatom (e.g., O, S, or N) in the ring, and optionally substituted by up to five substituents including one or more alkyl groups having up to 4 carbon atoms (e.g., methyl or ethyl), alkoxy having up to 4 carbon atoms, halo (i.e., fluoro, chloro, bromo or iodo), hydroxy, or nitro groups. Examples of aryl groups include phenyl, naphthyl, biphenyl, fluorenyl as well as furyl, thienyl, oxazolyl, and thiazolyl. "Arylalkylene" refers to an "alkylene" moiety to which an aryl group is attached. "Alkylarylene" refers to an "arylene" moiety to which an alkyl group is attached.

In embodiments of the present disclosure, the extrusion of a thermoplastic polyolefin is improved ("aided") by using a polymer processing aid (PPA).

In embodiments of the disclosure, one or more components of a polymer processing aid can be admixed (e.g. pre-mixed), or pre-blended (e.g. dry blended or melt blended) with a thermoplastic polyolefin followed by extrusion of the polyolefin.

In embodiments of the disclosure, one or more components of a polymer processing aid can be co-fed with a thermoplastic polyolefin to an extruder.

In embodiments of the disclosure one or more components of a polymer processing aid can be added to a

thermoplastic polyolefin to prepare a masterbatch of the polyolefin containing the one or more components of a polymer processing aids. The resulting polyolefin masterbatch can then be used to introduce the one or more components of a polymer processing aid into a thermoplastic polyolefin in any conventional manner prior to extrusion of the polyolefin (e.g. dry blending or melt blending) or during the extrusion of the polyolefin (e.g. co-feeding with a polyolefin to an extruder).

The Polymer Processing Aid

In an embodiment of the disclosure, a polymer processing aid (PPA), used to aid the extrusion of a thermoplastic polyolefin, comprises: i) a poly(ether-block-amide) copolymer having polyamide blocks and polyether blocks, and ii) a polycaprolactone (PCL) polymer.

In an embodiment of the disclosure, a polymer processing aid (PPA), used to aid the extrusion of a thermoplastic polyolefin, comprises: i) at least one poly(ether-block-amide) copolymer having polyamide blocks and polyether blocks and ii) at least one polycaprolactone (PCL) polymer.

In an embodiment of the disclosure, a polymer processing aid (PPA), used to aid the extrusion of a thermoplastic polyolefin, further comprises one or more than one poly(oxyalkylene) polymer.

In an embodiment of the disclosure, a polymer processing aid (PPA), used to aid the extrusion of a thermoplastic polyolefin, further comprises one or more than one poly(oxyethylene) polymer.

In an embodiment of the disclosure, a polymer processing aid (PPA), used to aid the extrusion of a thermoplastic polyolefin, further comprises a high pressure low density polyethylene (LDPE).

In an embodiment of the disclosure, a polymer processing aid (PPA), used to aid the extrusion of a thermoplastic polymer is further characterized by the substantial absence of perfluoroalkane compounds, fluoroelastomers, and fluoropolymers.

An embodiment of the disclosure is characterized by the substantial absence of perfluoroalkane compounds, fluoroelastomers, and fluoropolymers in an extrudable thermoplastic composition.

An embodiment of the disclosure is a process for preparing a thermoplastic composition extrudate which comprises melt extruding the thermoplastic composition in a melt extrusion process; where the thermoplastic composition is characterized by the substantial absence of perfluoroalkane compounds, fluoroelastomers, and fluoropolymers and where the melt extrusion process is carried out in the absence of perfluoroalkane compounds, fluoroelastomers, and fluoropolymers.

In embodiments of the disclosure, melt extrusion processes include film extrusion, extrusion blow molding, injection molding, pipe extrusion, wire extrusion, cable extrusion, and fiber extrusion, all of which are well known to persons skilled in the art.

The Polyamide/Polyether Block Copolymer (i.e. Poly(Ether-Block-Amide), PEBA)

In an embodiment of the disclosure, a polymer processing aid (PPA), used to aid the extrusion of a thermoplastic polyolefin, comprises: a poly(ether-block-amide) copolymer having polyamide blocks and polyether blocks. In the present disclosure, such a block copolymer, having polyamide blocks and polyether blocks, may also be called a "polyamide/-polyether block copolymer". In the present disclosure the term "poly(ether-block-amide) copolymer can be abbreviated as "PEBA copolymer"; similarly the term poly(ether-block-amide)" can be abbreviated as "PEBA".

In some embodiments of the disclosure, a PEBA copolymer may be represented by the following general formula:

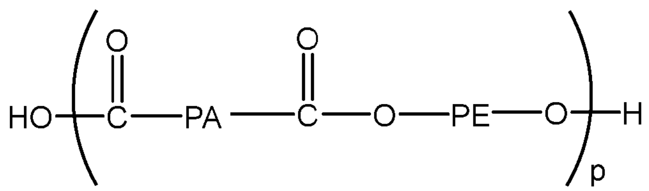

where PA is a polyamide block, PE is a polyether block and *p* indicates the length of the PEBA copolymer and is indicative of the total number of polyamide and polyether blocks.

In some embodiments of the disclosure, a PEBA copolymer may be represented by the following general formula:

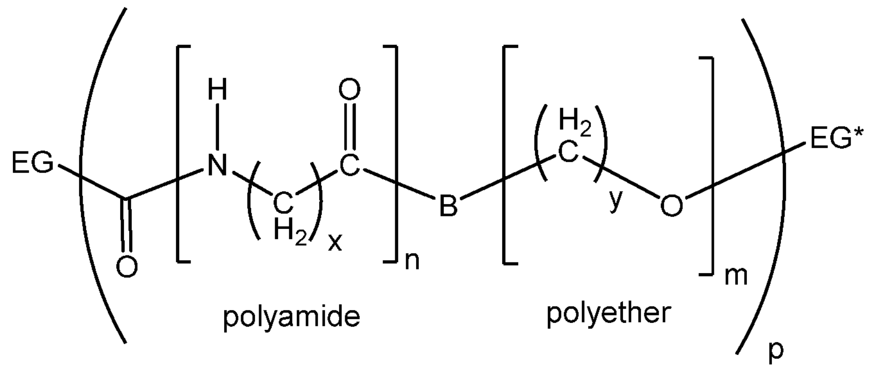

where, EG is a first unspecified end group, B is unspecified bridging group, and EG* is second unspecified end group, where EG, B, and EG* are determined by the method of synthesis used to make the PEBA copolymer; and where *n* indicates the length of a polyamide block, *x* indicates the length of the amide component within a polyamide block, *m* indicates the length of a poly(ether) block, *y* indicates the length of the ether component within a poly(ether) block, and *p* indicates the length of the PEBA copolymer and is indicative of the total number of polyamide and polyether blocks.

In some embodiments of the disclosure, a PEBA copolymer may be represented by the following general formula:

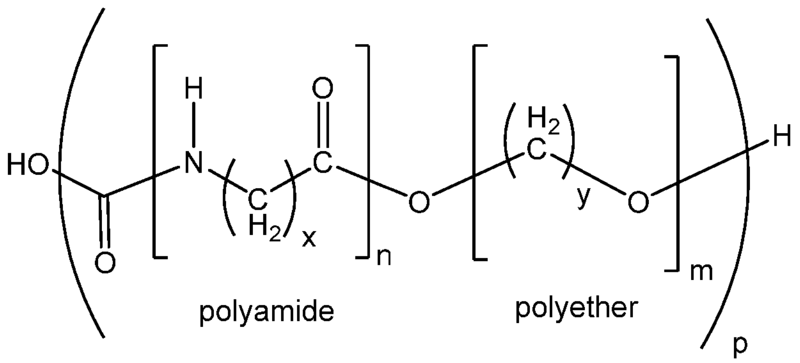

where *n* indicates the length of a polyamide block, *x* indicates the length of the amide component within a polyamide block, *m* indicates the length of a poly(ether) block, *y* indicates the length of the ether component within a poly(ether) block, and *p* indicates the length of the PEBA copolymer and is indicative of the total number of polyamide and polyether blocks.

In an embodiment of the present disclosure, a poly(ether-block-amide) copolymer (a "PEBA copolymer") comprises polyamide blocks and polyether blocks.

Suitable poly(ether-block-amide) copolymers for use in embodiments of the present disclosure are described in U.S. Pat. No. 5,986,005. Suitable PEBA copolymers which may be used in embodiments of the present disclosure, including methods for their preparation are further described by Malet, F. L. G. in The Handbook of Condensation Thermoplastic Elastomers, Chapter 9 ("Thermoplastic Poly(Ether-b-Amide) Elastomers: Synthesis", 2005 WILEY-VCH Verlag GmbH & Co. KGaA, Weinheim, pages 243-262, and Eustache, R. P. in The Handbook of Condensation Thermoplastic Elastomers, Chapter 10 "Poly(Ether-b-Amide) Thermoplastic Elastomers: Structure, Properties, and Applications ", 2005 WILEY-VCH Verlag GmbH & Co. KGaA, Weinheim, pages 263-281.

In an embodiment a poly(ether-block-amide) copolymer is the result of a copolycondensation reaction between one or more polyamide having reactive ends groups and one or more poly(oxyalkylene), such as for example, poly(oxyethylene), having reactive ends groups. Reactive end groups on a polyamide include for example, diamine chain ends, and dicarboxylic chain ends. Reactive end groups on a poly(oxyalkylene) include for example, dicarboxylic chain ends, diol chain ends, and diamine chain ends.

In embodiments, a poly(oxyalkylene) having diamine chain ends is obtained by cyanoethylation and hydrogenation of alpha-omega-dihydroxy aliphatic poly(oxyalkylene)s, which are also known in the art as polyether diols.

In embodiments, a polyamide having dicarboxylic chain ends is obtained by condensation of alpha-omega-aminocarboxylic acids of lactams (e.g. laurolactam), which is a bifunctional monomer or by condensation of dicarboxylic acids with diamines. Condensation polymerization may take place in the presence of a chain limiting dicarboxylic acid.

In embodiments, a polyamide block in the PEBA copolymer is derived from polyamide-12 (PA-12), or polyamide-11 (PA-11), or polyamide-6 (PA-6), or polyamide-66 (PA-66).

In embodiments, a polyamide block in the PEBA copolymer is derived from polyamide-12 (PA-12).

In embodiments, a polyamide block in the PEBA copolymer is derived from polyamide-11 (PA-11).

In embodiments, a polyamide block in the PEBA copolymer is derived from polyamide-6 (PA-6).

The weight average molecular weights (e.g. Mw and Mn) of a PEBA copolymer can be measured, for example, by gel permeation chromatography (i.e., size exclusion chromatography) using narrow molecular weight polymer standards with techniques known in the art.

In embodiments, the number average molecular weight, $M_n$ of the polyamide blocks in a PEBA copolymer will be from about 100 to about 15,000 g/mol, or about 300 to about 15,000 g/mol, or from about 600 to about 10,000 g/mol, or from about 600 to about 5,000 g/mol.

In embodiments, the number average molecular weight, $M_n$ of the polyether blocks in a PEBA copolymer will be from about 100 to about 15,000 g/mol, or from about 100 to about 10,000 g/mol, or from about 100 to about 6,000 g/mol, or from about 100 to about 3000 g/mol, or from about 200 to about 6,000 g/mol, or from about 200 to about 3,000 g/mol, or from about 250 to about 2,000 g/mol, or from about 750 to about 3,500 g/mol, or from about 1,000 to about 3,000 g/mol.

In embodiments, the number average molecular weight, $M_n$ of a PEBA copolymer will be from 10,000 to 500,000 g/mol, including subranges within this range and any number within this range. For example, in embodiments of the disclosure, the number average molecular weight, $M_n$ of the PEBA copolymer will be from 10,000 to 400,000 g/mol, or from 10,000 to 300,000 g/mol, of from 10,000 to 250,000 g/mol, or from 15,000 to 300,000 g/mol, or from 20,000 to 300,000 g/mol, or from 15,000 to 200,000 g/mol, or from 20,000 to 200,000 g/mol, or from 30,000 to 250,000 g/mol, or from about 25,000 to about 75,000 g/mol, or from about 50,000 to about 75,000 g/mol, or from about 100,000 to about 150,000 g/mol.

In embodiments, the number average molecular weight, $M_n$ of the PEBA copolymer will be at least 10,000 g/mol, or at least 20,000 g/mol, or at least 25,000 g/mol, or greater than 25,000 g/mol, or at least 30,000 g/mol, or greater than 30,000 g/mol, or at least 35,000 g/mol, or greater than 35,000 g/mol, or at least 50,000 g/mol, or greater than 50,000 g/mol.

In embodiments, the weight average molecular weight, $M_w$ of a PEBA copolymer will be from 25,000 to 500,000 g/mol, including subranges within this range and any number within this range. For example, in embodiments of the disclosure, the weight average molecular weight, $M_w$ of the PEBA copolymer will be from about 100,000 to about 250,000 g/mol, or from about 100,000 to about 150,000 g/mol, or from about 125,000 to about 150,000 g/mol.

In embodiments, the blocks of the polyamide and the polyether within a PEBA copolymer may be randomly distributed.

In embodiments, the PEBA copolymer comprises polyamide blocks and polyether blocks, and the polyamide blocks make up at least 50 percent by weight of the copolymer. In embodiments, the PEBA copolymer comprises polyamide blocks and polyether blocks, and the polyether blocks make up at least 50 percent by weight of the copolymer. In further embodiments, the PEBA copolymer comprises polyamide blocks and polyether blocks, and the molar ratio of polyamide blocks to polyether blocks is in the range of from 1:3 to 3:1, or from 1:2 to 2:1, or from 3:2 to 1:3, or from 2:3 to 3:1, or is about 1:1.

In an embodiment, the PEBA copolymer having polyamide blocks and polyether blocks may be prepared by reaction of polyamide and polyether block precursors. For example, a lactam, a polyether diol, and a chain-limiting diacid may be reacted together in the presence of a small amount of water to give a PEBA copolymer having polyamide blocks and polyether blocks of variable length and a statistically random distribution within the block copolymer chain.

In embodiments, polyether blocks may be derived from poly(oxyethylene), or from poly(oxypropylene), or from poly(tetramethylene ether) glycol, each in their natural state and copolycondensed with polyamide blocks containing carboxylic chain ends. Chain limiting agents may also be present during the polycondensation reaction to give PEBA copolymers containing polyamide blocks and polyether blocks which are randomly distributed within the block copolymer.

In embodiments, polyether blocks may be derived from poly(oxyethylene), or from poly(oxypropylene), or from poly(tetramethylene ether) glycol, which are first converted into polyether diamines by amination, and then copolycondensed with polyamide blocks containing carboxylic chain ends. Chain limiting agents may also be present during the polycondensation reaction to give PEBA copolymers containing polyamide blocks and polyether blocks which are randomly distributed within the block copolymer.

Suitable PEBA copolymers which may be used in embodiments of the disclosure are described in, U.S. Pat. Nos. 4,331,786; 4,115,475; 4,195,015; 4,839,441; 4,864,014; 4,230,838; 4,332,920; and 5,986,005. Additional PEBA copolymers which may be used in some embodiments of the disclosure are described in U.S. Pat. No. 8,231,950.

In embodiments of the disclosure, a polyether block may be derived from a poly(oxyethylene), also known as a polyethylene glycol (PEG).

In embodiments of the disclosure, a polyether block may be derived from poly(oxypropylene), also known as polypropylene glycol (PPG).

In embodiments of the disclosure, a polyether block may be derived from poly(tetramethylene ether) glycol (PTMG), also known as polytetramethylene oxide (PTMEO) or polytetrahydrofuran (PTHF).

In embodiments of the disclosure, the PEBA copolymer comprises: i) polyamide blocks selected from polyamide-12 (PA-12), polyamide-11 (PA-11), polyamide-6 (PA-6), or mixtures thereof; and ii) polyether blocks selected from polyethylene glycol (PEG), polypropylene glycol (PPG), polytetrahydrofuran (PTHF), or mixtures thereof.

In embodiments of the disclosure, the PEBA copolymer comprises: i) polyamide blocks selected from polyamide-12 (PA-12), polyamide-11 (PA-11), polyamide-6 (PA-6), or mixtures thereof; and ii) polyether blocks which are polyethylene glycol (PEG).

In an embodiment of the disclosure, the PEBA copolymer comprises: i) polyamide blocks which are polyamide-12 (PA-12) and ii) polyether blocks which are polyethylene glycol (PEG).

In some embodiments of the disclosure, the PEBA copolymer comprises from 10 to 20 polyamide blocks and from 10 to 20 polyether blocks.

In some embodiments of the disclosure, the PEBA copolymer comprises only one type of polyamide block and only one type of polyether block.

In an embodiment of the disclosure, the PEBA copolymer comprises: i) polyamide blocks which are polyamide-12 (PA-12) and ii) polyether blocks which are polyethylene glycol (PEG), wherein the polyamide-12 blocks represent about 30 to 70 weight percent of the copolymer, and the polyethylene glycol blocks represent about 70 to 30 weight percent of the copolymer.

In an embodiment of the disclosure, the PEBA copolymer comprises: i) polyamide blocks which are polyamide-12 (PA-12) and ii) polyether blocks which are polyethylene glycol (PEG), wherein the polyamide-12 blocks represent about 40 to 50 weight percent of the copolymer, and the polyethylene glycol blocks represent about 60 to 40 weight percent of the copolymer.

In an embodiment of the disclosure, the PEBA copolymer comprises: i) polyamide blocks which are polyamide-12 (PA-12) and ii) polyether blocks which are polyethylene glycol (PEG), wherein the polyamide-12 blocks represent about 45 weight percent of the copolymer, and the polyethylene glycol blocks represent about 55 weight percent of the copolymer.

In an embodiment of the disclosure, the PEBA copolymer comprises: i) from 10 to 20 polyamide blocks which are polyamide-12 (PA-12) and ii) from 10 to 20 polyether blocks which are polyethylene glycol (PEG).

In an embodiment of the disclosure, the PEBA copolymer comprises: i) polyamide blocks which are polyamide-12 (PA-12) and ii) polyether blocks which are polyethylene glycol (PEG), and has a number average molecular weight, Mn of from about 25,000 to about 75,000 g/mol.

In an embodiment of the disclosure, the PEBA copolymer comprises: i) polyamide blocks which are polyamide-12 (PA-12) and ii) polyether blocks which are polyethylene glycol (PEG), and has a number average molecular weight, Mn of from about 50,000 to about 75,000 g/mol.

In an embodiment of the disclosure, the PEBA copolymer comprises: i) polyamide blocks which are polyamide-12 (PA-12) and ii) polyether blocks which are polyethylene glycol (PEG), and has a number average molecular weight, Mn of about 66,100 g/mol.

In an embodiment of the disclosure, the PEBA copolymer comprises: i) polyamide blocks which are polyamide-12 (PA-12) and ii) polyether blocks which are polyethylene glycol (PEG), and has a weight average molecular weight, Mw of from about 100,000 to about 150,000 g/mol.

In an embodiment of the disclosure, the PEBA copolymer comprises: i) polyamide blocks which are polyamide-12 (PA-12) and ii) polyether blocks which are polyethylene glycol (PEG), and has a weight average molecular weight, Mw of from about 125,000 to about 150,000 g/mol.

In an embodiment of the disclosure, the PEBA copolymer comprises: i) polyamide blocks which are polyamide-12 (PA-12) and ii) polyether blocks which are polyethylene glycol (PEG), and has a weight average molecular weight, Mw of about 134,000 g/mol.

In an embodiment of the disclosure, the PEBA copolymer comprises: i) polyamide blocks which are polyamide-6 (PA-6) and ii) polyether blocks which are polyethylene glycol (PEG).

In an embodiment of the disclosure, the PEBA copolymer comprises: i) polyamide blocks which are polyamide-6 (PA-6) and ii) polyether blocks which are polyethylene glycol (PEG), wherein the polyamide-6 blocks represent about 30 to 60 weight percent of the copolymer, and the polyethylene glycol blocks represent about 70 to 40 weight percent of the copolymer.

In an embodiment of the disclosure, the PEBA copolymer comprises: i) polyamide blocks which are polyamide-6 (PA-6) and ii) polyether blocks which are polyethylene glycol (PEG), wherein the polyamide-6 blocks represent about 50 to 35 weight percent of the copolymer, and the polyethylene glycol blocks represent about 50 to 65 weight percent of the copolymer.

In an embodiment of the disclosure, the PEBA copolymer comprises: i) from 10 to 20 polyamide blocks which are polyamide-6 (PA-6) and ii) from 10 to 20 polyether blocks which are polyethylene glycol (PEG).

In an embodiment of the disclosure, the PEBA copolymer comprises: i) polyamide blocks which are polyamide-11 (PA-11) and ii) polyether blocks which are polyethylene glycol (PEG).

In an embodiment of the disclosure, the PEBA copolymer comprises: i) polyamide blocks which are polyamide-12 (PA-12) and ii) polyether blocks which are polytetrahydrofuran (PTHF).

In an embodiment of the disclosure, the PEBA copolymer comprises: i) polyamide blocks which are polyamide-12 (PA-12) and ii) polyether blocks which are polytetrahydrofuran (PTHF), wherein the polyamide-12 blocks represent about 75 to 10 weight percent of the copolymer, and the polytetrahydrofuran blocks represent about 25 to 90 weight percent of the copolymer.

In an embodiment of the disclosure, the PEBA copolymer comprises: i) polyamide blocks which are polyamide-12 (PA-12) and ii) polyether blocks which are polytetrahydrofuran (PTHF), wherein the polyamide-12 blocks represent about 80 to 60 weight percent of the copolymer, and the polytetrahydrofuran blocks represent about 20 to 40 weight percent of the copolymer.

In an embodiment of the disclosure, the PEBA copolymer comprises: i) polyamide blocks which are polyamide-12 (PA-12) and ii) polyether blocks which are polytetrahydrofuran (PTHF), wherein the polyamide-12 blocks represent about 40 to 60 weight percent of the copolymer, and the polytetrahydrofuran blocks represent about 60 to 40 weight percent of the copolymer.

In an embodiment of the disclosure, the PEBA copolymer comprises: i) polyamide blocks which are polyamide-12 (PA-12) and ii) polyether blocks which are polytetrahydrofuran (PTHF), wherein the polyamide-12 blocks represent about 30 to 10 weight percent of the copolymer, and the polytetrahydrofuran blocks represent about 70 to 90 weight percent of the copolymer.

In an embodiment of the disclosure, the PEBA copolymer comprises: i) from 10 to 20 polyamide blocks which are polyamide-12 (PA-12) and ii) from 10 to 20 polyether blocks which are polytetrahydrofuran (PTHF).

In an embodiment of the disclosure, the PEBA copolymer comprises: i) polyamide blocks which are polyamide-12 (PA-12) and ii) polyether blocks which are polytetrahydrofuran (PTHF), and has a number average molecular weight, Mn of from about 25,000 to about 75,000 g/mol.

In an embodiment of the disclosure, the PEBA copolymer comprises: i) polyamide blocks which are polyamide-12 (PA-12) and ii) polyether blocks which are polytetrahydrofuran (PTHF), and has a number average molecular weight, Mn of from about 40,000 to about 60,000 g/mol.

In an embodiment of the disclosure, the PEBA copolymer comprises: i) polyamide blocks which are polyamide-12 (PA-12) and ii) polyether blocks which are polytetrahydrofuran (PTHF), and has a number average molecular weight, Mn of about 50,000 g/mol.

In an embodiment of the disclosure, the PEBA copolymer comprises: i) polyamide blocks which are polyamide-6 (PA-6) and ii) polyether blocks which are polytetrahydrofuran (PTHF).

In an embodiment of the disclosure, the PEBA copolymer comprises: i) polyamide blocks which are polyamide-11 (PA-11) and ii) polyether blocks which are polytetrahydrofuran (PTHF).

In an embodiment of the disclosure, the PEBA copolymer is a commercially available elastomer and is sold under the trademame PEBAX®.

In further specific embodiments of the disclosure, the PEBA copolymer is a commercially available elastomer selected from the group consisting of: PEBAX 2533 SA 01, PEBAX 2533 SA 01 MED, PEBAX 2533 SD 02, PEBAX 3533 SA 01, PEBAX 3533 SA 01 MED, PEBAX 3533 SP 01, PEBAX 4011, PEBAX 4033 SA 01, PEBAX 4033 SA 01 MED, PEBAX 4033 SP 01, PEBAX 4533 SA 01, PEBAX 4533 SA 01 MED, PEBAX 4533 SP 01, PEBAX 5513 SA 01, PEBAX 5513 SP 01, PEBAX 5533 SA 01, PEBAX 5533 SA 01 MED, PEBAX 5533 SN 70 BLACK, PEBAX 5533 SP 01, PEBAX 6333 SA 01, PEBAX 6333 SA 01 MED, PEBAX 6333 SP01, PEBAX 7033 SA 01, PEBAX 7033 SA 01 MED, PEBAX 7033 SP 01, PEBAX 7233 SA 01, PEBAX 7233 SA 01 MED, PEBAX 7233 SP 01, PEBAX 7433 SA 01 MED, PEBAX Clear 1200, PEBAX ES 9002 UV, PEBAX MH 1657, PEBAX MH2030, PEBAX MV 1074 SA 01, PEBAX MV 1074 SA 01 MED, PEBAX MV 1074 SP 01, PEBAX MV 2080, PEBAX MV 3000 SP 01, PEBAX RNEW® 30R51 SA 01, PEBAX RNEW 35R53 SP 01, PEBAX RNEW 40 R53 SP 01, PEBAX RNEW 55R53 SP 01, PEBAX RNEW 63R53 SP 01, PEBAX RNEW 70R53 SP 01, PEBAX RNEW 72R53 SP 01, PEBAX RNEW 80R53 SP 02, and mixtures thereof.

In an embodiment of the disclosure, the PEBA copolymer is a commercially available elastomer and is sold under the trademame VESTAMID® or VESTAMID E.

In further specific embodiments of the disclosure, the PEBA copolymer is a commercially available elastomer selected from the group consisting of: VESTAMID D, VESTAMID DX, VESTAMID E, VESTAMID EX, VESTAMID Care, VESTAMID Care ML, VESTAMID Care ME, VESTAMID Care ME-B, VESTAMID L, VESTAMID LX, VESTAMID NRG, VESTAMID Terra, VESTAMID X, and mixtures thereof.

In an embodiment of the disclosure, a polymer processing aid will comprise two poly(ether-block-amide) copolymers of different number average molecular weight, $M_n$.

In an embodiment of the disclosure, a polymer processing aid will comprise two poly(ether-block-amide) copolymers of different number average molecular weight, $M_n$, and the two poly(ether-block-amide) copolymers having different $M_n$, will be present in a mole ratio of from 1:99 to 99:1 including any sub range encompassed within this range and any value within this range. For example, in embodiments of the disclosure, a polymer processing aid will comprise two poly(ether-block-amide) copolymers of different number average molecular weight, $M_n$, in a mole ratio of from 5:95 to 95:5, or from 10:90 to 90:10, or from 20:80 to 80:20, or from 25:75 to 75:25, or from 35:65 to 65:35, or from 40:60 to 60:40, or about 50:50.

As disclosed herein, the amount of PEBA copolymer used as a polymer processing aid (PPA) may be from 100 to 5,000 parts per million by weight (based on the weight of a thermoplastic polyolefin) including any sub range within this range and any value within this range. Further optimized PPA addition levels and ranges for a given extrusion process may be readily determined by those skilled in the art. For example, in certain embodiments, the amount of PEBA copolymer used as a polymer processing aid (PPA) will be from 200 to 4,000 parts per million by weight, or from 200 to 3,000 parts per million by weight, or from 200 to 2,500 parts per million by weight, or from 300 to 2,500 parts per million by weight, or from 300 to 2,500 parts per million by weight, or from 400 to 2,500 parts per million by weight, or from 500 to 2,500 parts per million by weight, or from 750 to 4,000 parts per million by weight, or from 750 to 3,000 parts per million by weight, or from 750 to 2500 parts per million by weight, or from 1,000 to 4,000 parts per million by weight, or from 1,000 to 3,000 parts per million by weight, or from 1,000 to 2,500 parts per million by weight, or from 1,000 to 2,250 parts per million by weight, or from 1,000 to 2,000 parts per million by weight, or from 1,250 to 1,750 parts per million by weight, or from 500 to 2,250 parts per million by weight, or from 500 to 2,000 parts per million by weight, or from 300 to 2,000 parts per million by weight, or from 200 to 2,000 parts per million by weight (based on the weight of the thermoplastic polyolefin).

In embodiments of the disclosure, the amount of PEBA copolymer used as a polymer processing aid (PPA) will be from 200 to 1,500 parts per million by weight (based on the weight of the thermoplastic polyolefin), or from 300 to 1,500 parts per million, or from 400 to 1,500 parts per million by weight, or from 500 to 1,500 parts per million by weight, or from 750 to 1,500 parts per million by weight, or from 300 to 1,250 parts per million by weight, or from 400 to 1,250 parts per million by weight, or from 500 to 1,250 parts per million by weight, or from 750 to 1,250 parts per million by weight, or from 200 to 1,000 parts per million by weight (based on the weight of the thermoplastic polyolefin), or from 300 to 1,000 parts per million, or from 500 to 1,000 parts per million by weight, or from 750 to 1,000 parts per million by weight.

In an embodiment of the disclosure, a PEBA copolymer is added to a thermoplastic polyolefin (a linear polyethylene) using a masterbatch formulation containing the PEBA copolymer. The term masterbatch is well known to persons skilled in the art. Generally, the term "masterbatch" refers to the practice of first melt mixing an additive, for example, a PEBA copolymer, with a small amount of a given thermoplastic polyolefin (e.g. a linear polyethylene), followed by blending (by for example melt mixing or dry blending) the resulting "masterbatch" with the remaining bulk of the thermoplastic polyolefin (e.g. the linear polymer).

In embodiments of the disclosure, from about 0.1 to about 15.0 weight percent, or from about 0.5 to about 15.0 weight percent, or from about 0.5 to about 10.0 weight percent, or from about 0.1 to about 10.0 weight percent, or from about 0.1 to about 7.5 weight percent, or from about 0.5 to about 7.5 weight percent or from about 0.5 to about 5.0 weight percent, or from about 0.1 to about 5.0 weight percent, or from about 1.0 to about 15.0 weight percent, or from about 1.0 to about 5.0 weight percent, or from about 1.0 to about 7.5 weight percent, or from about 1.0 to about 5.0 weight percent, or from about 0.1 to about 2.5 weight percent, or from about 0.5 to about 2.5 weight percent of a masterbatch will be used in a blend with the bulk polymer (where weight percent of the masterbatch is based on the combined weight of the masterbatch and the bulk polymer).

In embodiments of the present disclosure, a masterbatch (e.g. of a linear polyethylene) may contain an amount of PEBA copolymer in the range of from 500 to 50,000 parts per million by weight (based on the weight of the masterbatch) including subranges within this range and any number within this range. For example, in further embodiments of the disclosure, a masterbatch may contain an amount of PEBA copolymer in the range of from 500 to 40,000 ppm, or from 500 to 35,000 ppm, or from 500 to 40,000 ppm, or from 500 to 25,000 ppm, or from 1,000 to 40,000 ppm, or from 1,000 to 35,000 ppm, or from 1,000 to 30,000 ppm, or from 1,000 to 25,000 parts per million by weight (based on the weight of the masterbatch), or from 5,000 to 25,000 ppm, or from 1,000 to 20,000 ppm, or from 2,000 to 20,000 ppm, or from 3,000 to 20,000, or from 4,000 to 20,000 ppm, or from 5,000 to 20,000 ppm, or from 5,000 to 17,500, or from 5,000 to 15,000 or from 5,000 to 12,500 ppm, or from 2,500 to 15,000 ppm, or from 5,000 to 15,000 ppm, or from 7,500 to 15,000 ppm, or from 7,500 ppm to 12,500 ppm, or from 5,000 to 50,000 ppm, or from 7,500 to 50,000 ppm, or from 10,000 to 50,000 ppm, or from 10,000 to 35,000 ppm, or from 10,000 to 25,000 ppm, or from 5,000 to 35,000 ppm, or from 5,000 to 30,000 ppm, or from 5,000 to 25,000 ppm, or from 15,000 to 30,000 ppm, or from 17,500 to 27,500 ppm, or from 20,000 to 25,000 ppm.

The PEBA copolymer used as a polymer processing aid (PPA) may be used in the form of a semi solid or a viscous liquid, or as powders, pellets, or granules.

## The Polycaprolactone (PCL) Polymer

In an embodiment of the present disclosure, a polymer processing aid will comprise a polycaprolactone polymer.

In the present disclosure the term "polycaprolactone" or its abbreviation "PCL" is used to connote polycaprolactone polymers which are polymers comprising, as a repeating unit an ester derived from i) the polycondensation of a hydroxycarboylic acid, 6-hydroxyhexanoic acid, or derived from ii) the ring opening polymerization of epsilon-caprolactone (which is a cyclic ester comprising a seven membered ring) or substituted derivatives thereof (see for example, Labet M, Thielemans W. in "Synthesis of polycaprolactone: a review". Chemical Society Reviews, December 2009, 38 (12): 3484-3504).

Hence, in the present disclosure, the term "polycaprolactone" is inclusive of polycaprolactone polymers having the following general formula as a repeating unit:

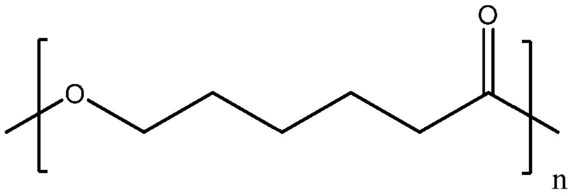

A catalyst such as stannous octoate (i.e. tin(II) 2-ethylhexanoate) may be used to catalyze the ring opening polymerization reaction.

It is also well known to persons skilled in the art that a polycaprolactone polymer can be made by the ring opening polymerization of epsilon-caprolactone, using a suitable hydroxyl group functionalized organic compound as an initiator. For example, methanol, ethanol, and isopropanol which are monols, or diethylene glycol and 1,4-butanediol which are diols may be used as initiators for the polymerization of epsilon-caprolactone.

In embodiments of the disclosure, a polycaprolactone polymer may be a polycaprolactone monol, a polycaprolactone diol, a polycaprolactone triol, a polycaprolactone tetrol, or mixtures thereof. For example, in embodiments of the disclosure a polycaprolactone polymer is a polycaprolactone monol having the general formula:

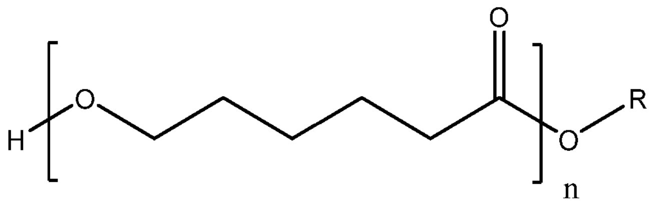

, a polycaprolactone diol having the general formula:

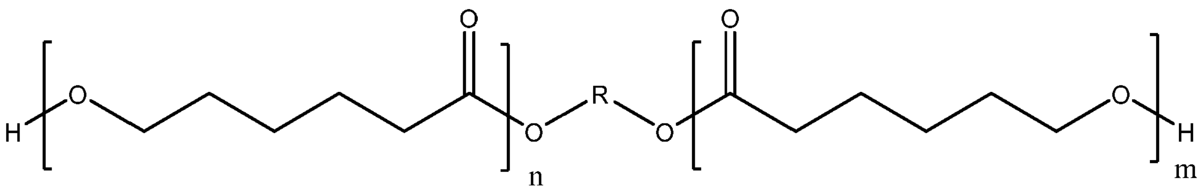

, a polycaprolactone triol having the general formula:

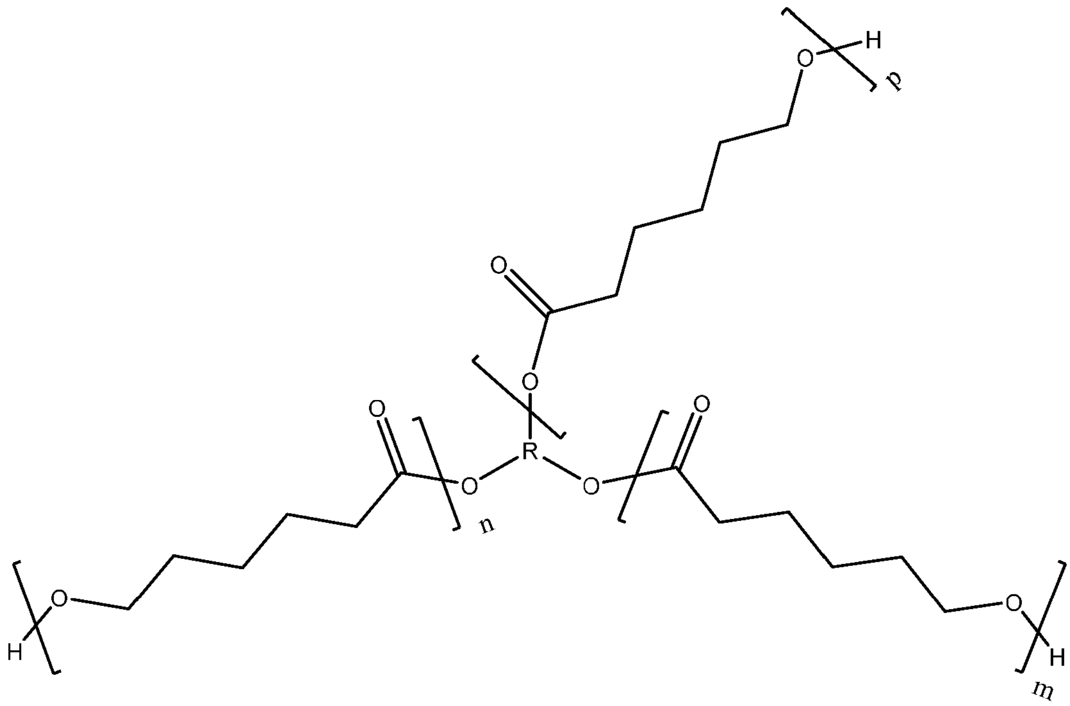

,

or a polycaprolactone tetrol having the general formula:

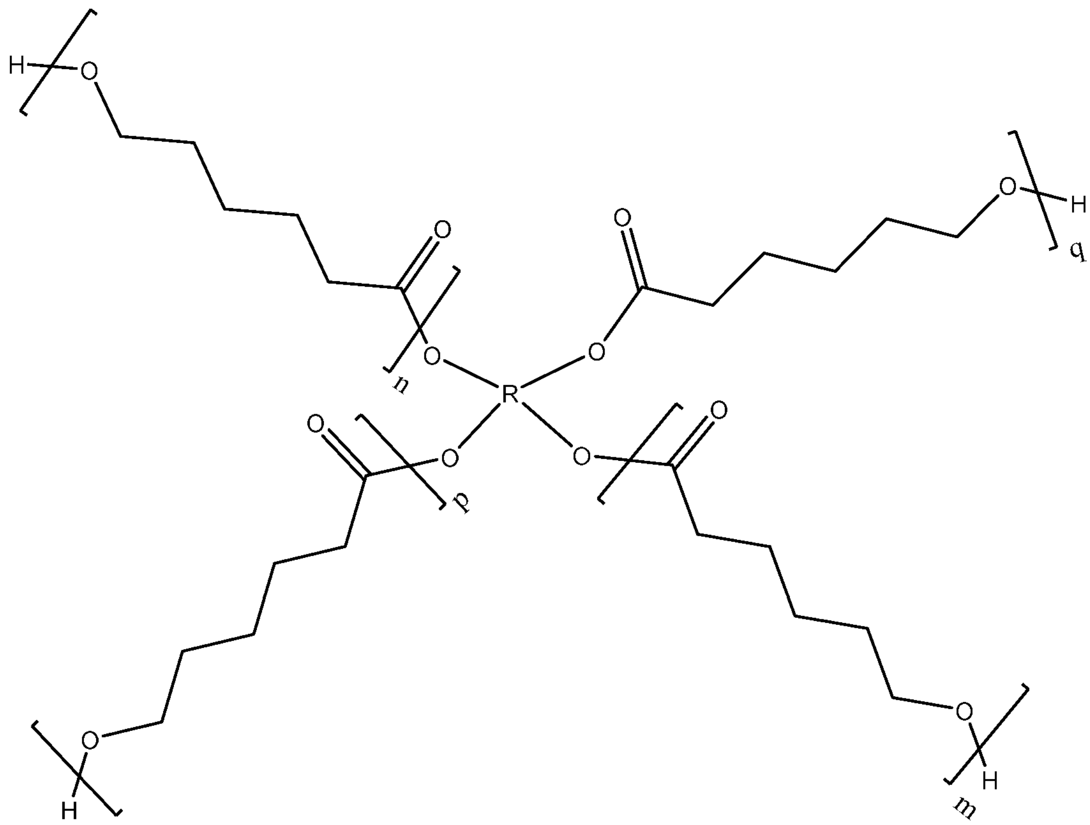

where each of m, n, p and q represent a plurality of caprolactone units, and R is an organic group which corresponds to the organic alcohol compound used to initiate the ring opening polymerization of epsilon-caprolactone.

As discussed above, the R group referred to above will reflect the nature of the specific monol, diol, triol, tetrol, or polyol compound, $R\text{-}(OH)_r$ used as the initiator for the ring opening polymerization of caprolactone. For example, ethanol

will provide an R group of $-CH_2CH_2$ and an r of 1, diethylene glycol will provide an R group of $-CH_2CH_2-O-CH_2CH_2-$ and an r of 2, while 1,4-butanediol will provide an R group of $-CH_2CH_2CH_2CH_2-$and an r of 2.

It is also contemplated by the present disclosure to use either or both of an unsubstituted polycaprolactone polymer or a substituted polycaprolactone polymer as a polymer processing aid. Such an unsubstituted or a substituted polycaprolactone polymer may be represented by the general formula:

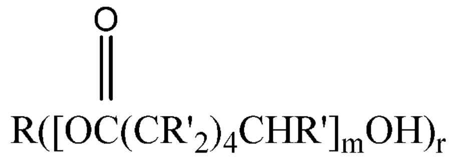

where R is a defined as above and R' is a hydrogen, alkyl, alkoxy, aryl, cycloalkyl, alkylaryl, or arylalkyl moiety, each moiety having up to 20 carbon atoms; m is an integer representing the average number of repeating ester units, and r represents the number of hydroxy groups.

In an embodiment r is 1.

In an embodiment r is from 2 to 8.

In an embodiment, at least 6 of the R' moieties is a hydrogen.

In an embodiment, each R' is hydrogen.

In an embodiment, r is from 2 to 4.

Further specific examples of polycaprolactone polymers, including those derived from polyols and polyalkylene glycols, which may be employed in embodiments of the present disclosure as well as their methods of preparation, are provided in U.S. Pat. No. 3,169,945 and U.S. Pat. No. 4,751,112.

In an embodiment of the disclosure, a polycaprolactone polymer is not a block copolymer. In an embodiment of the disclosure, a polycaprolactone polymer is not a block copolymer comprising units which make up a polyoxyalkylene polymer.

In an embodiment of the disclosure, a polycaprolactone polymer is a commercially available polyester sold under the tradenames CAPA®.

In an embodiment of the disclosure, a polycaprolactone polymer is a commercially available polyester sold under the tradenames TONE®, CAPROMER®, and PLACCEL®.

In embodiments of the disclosure, a polycaprolactone polymer is made from the ring opening polymerization of epsilon-caprolactone, using an initiator selected from the group consisting of butanediol, diethylene glycol, hexane diol, monoethylene glycol, pentaerythritol, timethylolpropane, neopentyl glycol, and butyl ethyl propanediol.

The weight average molecular weights (e.g. Mw and Mn) of a polycaprolactone polymer can be measured, for example, by gel permeation chromatography (i.e., size exclusion chromatography) using narrow molecular weight polymer standards with techniques known in the art.

In embodiments a polycaprolactone polymer has a number average molecular weight, $M_n$ of from 100 to 32,000 g/mol, or from 100 to 25,000 g/mol, or from 100 to 20,000 g/mol, or from 100 to 15,000 g/mol, or from 100 to 12,500 g/mol, or from 100 to 10,000 g/mol, or from 200 to 15,000 g/mol, or from 200 to 12,500 g/mol, or from 200 to 10,000 g/mol, of from 200 to 9,000 g/mol, or from 200 to 8,000 g/mol, or from 200 to 7,000 g/mol, of from 200 to 6,000 g/mol, or from 200 to 5,000 g/mol, or from 200 to about 4,500 g/mol, or from 200 to 4,000 g/mol, or from 200 to 3,000 g/mol, or from 200 to 2,000 g/mol, or from 1,000 to 10,000 g/mol, or from 1500 to 10,000 g/mol, or from 2000 to 10,000 g/mol, or from 2,000 to 8,000 g/mol, or from 2,000 to 6,000 g/mol, or from 2,000 to 4,000 g/mol, or from 1,000 to 32,000 g/mol, or from 2,000 to 32,000 g/mol.

In embodiments a polycaprolactone polymer has a number average molecular weight, $M_n$ of from greater than 30,000 g/mol. For example, in embodiments of the disclosure a polycaprolactone polymer has a number average molecular weight, $M_n$ of from 30,000 to 100,000 g/mol, or from 30,000 to 90,000 g/mol, or from 35,000 to 90,000 g/mol, or from 35,000 to 85,000 g/mol.

In an embodiment of the disclosure, a polycaprolactone polymer is a polycaprolactone diol polymer, with a number average molecular Mn, of about 400 g/mol, and which is derived from epsilon-caprolactone using a diol (e.g. 1,4-butane) as an initiator.

In an embodiment of the disclosure, a polycaprolactone polymer is a polycaprolactone diol polymer, with a number average molecular Mn, of about 1,000 g/mol, and which is derived from epsilon-caprolactone using a diol (e.g. 1,4-butane) as an initiator.

In an embodiment of the disclosure, a polycaprolactone polymer is a polycaprolactone diol polymer, with a number average molecular Mn, of about 2,000 g/mol, and which is derived from epsilon-caprolactone using a diol (e.g. 1,4-butane) as an initiator.

In an embodiment of the disclosure, a polycaprolactone polymer is a polycaprolactone diol polymer, with a number average molecular Mn, of about 4,000 g/mol, and which is derived from epsilon-caprolactone using a diol (e.g. 1,4-butanediol) as an initiator.

In an embodiment of the disclosure, a polycaprolactone polymer is a polycaprolactone diol polymer, with a number average molecular Mn, of about 32,000 g/mol, and which is derived from epsilon-caprolactone using a diol (e.g. 1,4-butanediol) as an initiator.

In an embodiment of the disclosure, a polycaprolactone polymer is a polycaprolactone diol polymer, with a number average molecular Mn, of about 32,000 g/mol, and which is derived from epsilon-caprolactone using a diol (e.g. 1,4-butanediol) as an initiator.

In an embodiment of the disclosure, a polycaprolactone polymer is a polycaprolactone monol polymer, with a number average molecular Mn, of from about 200 g/mol to about 10,000 g/mol, and which is derived from epsilon-caprolactone using a linear monol (e.g. cetyl alcohol) as an initiator. In an embodiment of the disclosure, a polycaprolactone polymer is a polycaprolactone monol polymer, with a number average molecular Mn, of from about 400 g/mol to about 8,000 g/mol, and which is derived from epsilon-caprolactone using a linear monol (e.g. cetyl alcohol) as an initiator. In an embodiment of the disclosure, a polycaprolactone polymer is a polycaprolactone monol polymer, with a number average molecular Mn, of from about 500 g/mol to about 6,000 g/mol, and which is derived from epsilon-caprolactone using a linear monol (e.g. cetyl alcohol) as an initiator. In an embodiment of the disclosure, a polycaprolactone polymer is a polycaprolactone monol polymer, with a number average molecular Mn, of from about 750 g/mol to about 4,000 g/mol, and which is derived from epsilon-caprolactone using a linear monol (e.g. cetyl alcohol) as an initiator. In an embodiment of the disclosure, a polycaprolactone polymer is a polycaprolactone monol polymer, with a number average molecular Mn, of from about 750 g/mol to about 2,000 g/mol, and which is derived from epsilon-caprolactone using a linear monol (e.g. cetyl alcohol) as an initiator. In an embodiment of the disclosure, a polycaprolactone polymer is a polycaprolactone monol polymer, with a number average molecular Mn, of from about 500 g/mol to about 1,500 g/mol, and which is derived from epsilon-caprolactone using a linear monol (e.g. cetyl alcohol) as an initiator.

In an embodiment of the disclosure, a polycaprolactone polymer is a polycaprolactone monol polymer, with a number average molecular Mn, of from about 200 g/mol to about 10,000 g/mol, and which is derived from epsilon-caprolactone using a branched monol as an initiator. In an embodiment of the disclosure, a polycaprolactone polymer is a polycaprolactone monol polymer, with a number average molecular Mn, of from about 400 g/mol to about 8,000 g/mol, and which is derived from epsilon-caprolactone using a branched monol as an initiator. In an embodiment of the disclosure, a polycaprolactone polymer is a polycaprolactone monol polymer, with a number average molecular Mn, of from about 500 g/mol to about 6,000 g/mol, and which is derived from epsilon-caprolactone using a branched monol as an initiator. In an embodiment of the disclosure, a polycaprolactone polymer is a polycaprolactone monol polymer, with a number average molecular Mn, of from about 750 g/mol to about 4,000 g/mol, and which is derived from epsilon-caprolactone using a branched monol as an initiator. In an embodiment of the disclosure, a polycaprolactone polymer is a polycaprolactone monol polymer, with a number average molecular Mn, of from about 750 g/mol to about 2,000 g/mol, and which is derived from epsilon-caprolactone using a branched monol as an initiator. In an embodiment of the disclosure, a polycaprolactone polymer is a polycaprolactone monol polymer, with a number average molecular Mn, of from about 500 g/mol to about 1,500 g/mol, and which is derived from epsilon-caprolactone using a branched monol as an initiator.

In an embodiment of the disclosure, a polycaprolactone polymer is a polycaprolactone diol polymer, with a number average molecular Mn, of from about 200 g/mol to about 10,000 g/mol, and which is derived from epsilon-caprolactone using a linear diol (e.g. 1,4-butanediol, hexane diol, diethylene glycol) as an initiator. In an embodiment of the disclosure, a polycaprolactone polymer is a polycaprolactone diol polymer, with a number average molecular Mn, of from about 400 g/mol to about 8,000 g/mol, and which is derived from epsilon-caprolactone using a linear diol (e.g. 1,4-butanediol, hexanediol, or diethylene glycol) as an initiator. In an embodiment of the disclosure, a polycaprolactone polymer is a polycaprolactone diol polymer, with a number average molecular Mn, of from about 500 g/mol to about 6,000 g/mol, and which is derived from epsilon-caprolactone using a linear diol (e.g. 1,4-butanediol, hexanediol, or diethylene glycol) as an initiator. In an embodiment of the disclosure, a polycaprolactone polymer is a polycaprolactone diol polymer, with a number average molecular Mn, of from about 750 g/mol to about 4,000 g/mol, and which is derived from epsilon-caprolactone using a linear diol (e.g. 1,4-butanediol, hexanediol, or diethylene glycol) as an initiator.

In an embodiment of the disclosure, a polycaprolactone polymer is a polycaprolactone diol polymer, with a number average molecular Mn, of from about 200 g/mol to about 10,000 g/mol, and which is derived from epsilon-caprolactone using a branched diol (e.g. neopentyl diol, or butyl ethyl propanediol) as an initiator. In an embodiment of the disclosure, a polycaprolactone polymer is a polycaprolactone diol polymer, with a number average molecular Mn, of from about 400 g/mol to about 8,000 g/mol, and which is derived from epsilon-caprolactone using a branched diol (e.g. neopentyl diol, or butyl ethyl propanediol) as an initiator. In an embodiment of the disclosure, a polycaprolactone polymer is a polycaprolactone diol polymer, with a number average molecular Mn, of from about 500 g/mol to about 6,000 g/mol, and which is derived from epsilon-caprolactone using a branched diol (e.g. neopentyl diol, or butyl ethyl propanediol) as an initiator. In an embodiment of the disclosure, a polycaprolactone polymer is a polycaprolactone diol polymer, with a number average molecular Mn, of from about 750 g/mol to about 4,000 g/mol, and which is derived from epsilon-caprolactone using a branched diol (e.g. neopentyl diol, or butyl ethyl propanediol) as an initiator.

In an embodiment of the disclosure, a polycaprolactone polymer is a polycaprolactone triol polymer, with a number average molecular Mn, of from about 100 g/mol to about 8,000 g/mol, and which is derived from epsilon-caprolactone using a linear triol as an initiator. In an embodiment of the disclosure, a polycaprolactone polymer is a polycaprolactone triol polymer, with a number average molecular Mn, of from about 200 g/mol to about 6,000 g/mol, and which is derived from epsilon-caprolactone using a linear triol as an initiator. In an embodiment of the disclosure, a polycaprolactone polymer is a polycaprolactone triol polymer, with a number average molecular Mn, of from about 200 g/mol to about 4,000 g/mol, and which is derived from epsilon-caprolactone using a linear triol as an initiator. In an embodiment of the disclosure, a polycaprolactone polymer is a polycaprolactone triol polymer, with a number average molecular Mn, of from about 200 g/mol to about 3,000 g/mol, and which is derived from epsilon-caprolactone using a linear triol as an initiator.

In an embodiment of the disclosure, a polycaprolactone polymer is a polycaprolactone triol polymer, with a number average molecular Mn, of from about 100 g/mol to about 8,000 g/mol, and which is derived from epsilon-caprolactone using a branched triol (e.g. trimethylolpropane) as an initiator. In an embodiment of the disclosure, a polycaprolactone polymer is a polycaprolactone triol polymer, with a number average molecular Mn, of from about 200 g/mol to about 6,000 g/mol, and which is derived from epsilon-caprolactone using a branched triol (e.g. trimethylolpropane) as an initiator. In an embodiment of the disclosure, a polycaprolactone polymer is a polycaprolactone triol polymer, with a number average molecular Mn, of from about 200 g/mol to about 4,000 g/mol, and which is derived from epsilon-caprolactone using a branched triol (e.g. trimethylolpropane) as an initiator. In an embodiment of the disclosure, a polycaprolactone polymer is a polycaprolactone triol polymer, with a number average molecular Mn, of from about 200 g/mol to about 3,000 g/mol, and which is derived from epsilon-caprolactone using a branched triol (e.g. trimethylolpropane) as an initiator.

In an embodiment of the disclosure, a polycaprolactone polymer is a polycaprolactone tetrol polymer, with a number average molecular Mn, of from about 100 g/mol to about 15,000 g/mol, and which is derived from epsilon-caprolactone using a tetrol (e.g. pentaerythritol) as an initiator. In an embodiment of the disclosure, a polycaprolactone polymer is a polycaprolactone tetrol polymer, with a number average molecular Mn, of from about 200 g/mol to about 10,000 g/mol, and which is derived from epsilon-caprolactone using a tetrol (e.g. pentaerythritol) as an initiator. In an embodiment of the disclosure, a polycaprolactone polymer is a polycaprolactone tetrol polymer, with a number average molecular Mn, of from about 200 g/mol to about 8,000 g/mol, and which is derived from epsilon-caprolactone using a tetrol (e.g. pentaerythritol) as an initiator.

In an embodiment of the disclosure, a polycaprolactone polymer is a polycaprolactone copolymer which is derived from epsilon-caprolactone using a polyalkylene glycol (e.g. polytetramethylene ether glycol, also known as polytetrahydrofuran) as an initiator.

As disclosed herein, the amount of polycaprolactone polymer used as a polymer processing aid (PPA) may be from 100 to 5,000 parts per million by weight (based on the weight of a thermoplastic polyolefin) including any sub range within this range and any value within this range. Further optimized PPA addition levels and ranges for a given extrusion process may be readily determined by those skilled in the art. For example, in certain embodiments, the amount of polycaprolactone polymer used as a polymer processing aid (PPA) will be from 200 to 4,000 parts per million by weight, or from 100 to 3,000 parts per million by weight, or from 200 to 3,000 parts per million by weight, or from 100 to 2000 parts per million by weight, or from 200 to 2,500 parts per million by weight, or from 300 to 2,500 parts per million by weight, or from 300 to 2,500 parts per million by weight, or from 400 to 2,500 parts per million by weight, or from 500 to 2,500 parts per million by weight, or from 750 to 4000 parts per million by weight, or from 750 to 3,000 parts per million by weight, or from 750 to 2,500 parts per million by weight, or from 1,000 to 4,000 parts per million by weight, or from 1,000 to 3,000 parts per million by weight, or from 1,000 to 2,500 parts per million by weight, or from 1,000 to 2,250 parts per million by weight, or from 1,000 to 2,000 parts per million by weight, or from 1,250 to 1,750 parts per million by weight, or from 500 to 2,250 parts per million by weight, or from 500 to 2,000 parts per million by weight, or from 300 to 2,000 parts per million by weight, or from 200 to 2,000 parts per million by weight (based on the weight of the thermoplastic polyolefin).

In an embodiment of the disclosure, a polycaprolactone polymer is added to a thermoplastic polyolefin (a linear polyethylene) using a masterbatch formulation containing the polycaprolactone polymer. The term masterbatch is well known to persons skilled in the art. Generally, the term "masterbatch" refers to the practice of first melt mixing an additive, for example, a polycaprolactone polymer, with a small amount of a given thermoplastic polyolefin (e.g. a linear polyethylene), followed by blending (by for example melt mixing or dry blending) the resulting "masterbatch" with the remaining bulk of the thermoplastic polyolefin (e.g. the linear polymer).

In embodiments of the disclosure, from about 0.1 to about 15.0 weight percent, or from about 0.5 to about 15.0 weight percent, or from about 0.5 to about 10.0 weight percent, or from about 0.1 to about 10.0 weight percent, or from about 0.1 to about 7.5 weight percent, or from about 0.5 to about 7.5 weight percent or from about 0.5 to about 5.0 weight percent, or from about 0.1 to about 5.0 weight percent, or from about 1.0 to about 15.0 weight percent, or from about 1.0 to about 5.0 weight percent, or from about 1.0 to about 7.5 weight percent, or from about 1.0 to about 5.0 weight percent, or from about 0.1 to about 2.5 weight percent, or from about 0.5 to about 2.5 weight percent of a masterbatch will be used in a

blend with the bulk polymer (where weight percent of the masterbatch is based on the combined weight of the masterbatch and the bulk polymer).

In embodiments of the present disclosure, a masterbatch (e.g. of a linear polyethylene) may contain an amount of a polycaprolactone polymer in the range of from 500 to 50,000 parts per million by weight (based on the weight of the masterbatch) including subranges within this range and any number within this range. For example, in further embodiments of the disclosure, a masterbatch may contain an amount of polycaprolactone polymer in the range of from 500 to 40,000 ppm, or from 500 to 35,000 ppm, or from 500 to 40,000 ppm, or from 500 to 25,000 ppm, or from 1,000 to 40,000 ppm, or from 1,000 to 35,000 ppm, or from 1,000 to 30,000 ppm, or from 1,000 to 25,000 parts per million by weight (based on the weight of the masterbatch), or from 5,000 to 25,000 ppm, or from 1,000 to 20,000 ppm, or from 2,000 to 20,000 ppm, or from 3,000 to 20,000, or from 4,000 to 20,000 ppm, or from 5,000 to 20,000 ppm, or from 5,000 to 17,500, or from 5,000 to 15,000 or from 5,000 to 12,500 ppm, or from 2,500 to 15,000 ppm, or from 5,000 to 15,000 ppm, or from 7,500 to 15,000 ppm, or from 7,500 ppm to 12,500 ppm, or from 5,000 to 50,000 ppm, or from 7,500 to 50,000 ppm, or from 10,000 to 50,000 ppm, or from 10,000 to 35,000 ppm, or from 10,000 to 25,000 ppm, or from 5,000 to 35,000 ppm, or from 5,000 to 30,000 ppm, or from 5,000 to 25,000 ppm, or from 15,000 to 30,000 ppm, or from 17,500 to 27,500 ppm, or from 20,000 to 25,000 ppm.

The polycaprolactone (PCL) polymer used as a polymer processing aid (PPA) may be used in the form of a semi solid or a viscous liquid, or as powders, pellets, or granules.

The Poly(oxyalkylene) Polymer

In an embodiment of the present disclosure, a polymer processing aid will comprise a poly(oxyalkylene) polymer, also known as polyalkylene glycol (PAG) or polyalkylene oxide.

In an embodiment of the present disclosure, a polymer processing aid will comprise a poly(oxyethylene) polymer, also known as polyethylene glycol or polyethylene oxide.

In an embodiment of the present disclosure, a polymer processing aid will comprise a poly(oxypropylene) glycol, also known as polypropylene glycol or polypropylene oxide.

A poly(oxyalkylene) polymer, can in embodiments of the disclosure be represented by formula $A[(OR^1)_xOR^2]_y$, wherein A is typically alkylene interrupted by one or more ether linkages, y is 2 or 3, $(OR^1)_x$ is a poly(oxyalkylene) chain having a plurality (x) of oxyalkylene groups, $OR^1$, wherein each $R^1$ is independently $C_2$ to $C_5$ alkylene, in some embodiments, $C_2$ to $C_3$ alkylene, $R^2$ is hydrogen, alkyl, aryl, arylalkenyl, alkylarylenyl, - C(O)-alkyl, -C(O)-aryl, -C(O)-arylalkenyl, or -C(O)-alkylarylenyl, wherein -C(O)-is bonded to the O of $OR^2$.

In an embodiment of the disclosure, a poly(oxyalkylene) polymer can be a homopolymer such as a poly(oxyethylene) polymer (also called a polyethylene glycol in the present disclosure) in which each $R^1$ is $-CH_2CH_2-$, or a homopolymer such as a poly(oxypropylene) polymer in which each $R^1$ is $-C_3H_6-$.

In another embodiment of the disclosure, a poly(oxyalkylene) polymer is a poly(oxyalkylene) polymer comprising a chain of randomly distributed oxyalkylene groups (e.g., a copolymer comprising $-OC_2H_4-$ and $-OC_3H_6-$ units) or having alternating blocks of repeating oxyalkylene groups (e.g., a copolymer comprising $(-OC_2H_4-)_a$ and $(-OC_3H_6-)_b$ blocks, wherein a+b is x).

Poly(oxyalkylene) copolymers comprising randomly distributed, or alternating units of $(-OC_2H_4-)$ and $(-OC_3H_6-)$ or blocks of $(-OC_2H_4-)_a$ and $(-OC_3H_6-)_b$ are sometimes referred to as "poloxamers" and are available commercially under the tradenames PLURONIC®, "KOLLIPHOR® and "SYNPERONIC®.

In some embodiments of the disclosure, A is ethylene, $-CH_2-CH(-)-CH_2-$(derived from glycerol), $CH_3CH_2C(CH_2-)_3$ (derived from 1,1,1-trimethylol propane), poly(oxypropylene), $-CH_2CH_2-O-CH_2CH_2-$, or $-CH_2CH_2-O-CH_2CH_2-O-CH_2CH_2-$.

In some embodiments of the disclosure, $R^2$ is hydrogen, methyl, butyl, phenyl, benzyl, acetyl, benzoyl, or stearyl.

In other embodiments of the disclosure, poly(oxyalkylene) polymers are polyesters prepared, for example, from dicarboxylic acids and poly(oxyalkylene) polymers represented by formula $A[(OR^1)_xOR^2]_y$, wherein A, $R^1$, and x are as defined above, $R^2$ is hydrogen, and y is 2.

In an embodiment of the disclosure, the major proportion of a poly(oxyalkylene) polymer by weight will be the repeating oxyalkylene groups, $(OR^1)$.

In an embodiment of the disclosure, poly(oxyalkylene) polymer is a polyethylene glycol (PEG). Polyethylene glycol (PEG) can be represented by formula $H(O-CH_2CH_2-)_xOH$. Many polyethylene glycols, as well as their ethers, and their esters are commercially available and they are all contemplated for use in embodiments of the present disclosure.

The weight average molecular weights (e.g. Mn and Mw) of a polyalkylene glycol such as a polyethylene glycol (PEG) can be measured, for example, by gel permeation chromatography (i.e., size exclusion chromatography) using narrow molecular weight distribution poly(oxyalkylene) polymers (e.g. polyethylene glycols) as standards with techniques known in the art.

In embodiments of the disclosure, a polyalkylene glycol (PAG) has a value of x such that the weight average

molecular weight, Mw of the polyalkylene glycol polymer is at least about 20,000 g/mol, or at least about 30,000 g/mol, or at least about 40,000 g/mol, or at least about 50,000 g/mol, or at least about 60,000 g/mol.

In embodiments of the disclosure, a polyalkylene glycol (PAG) has a value of x such that the weight average molecular weight, Mw of the polyalkylene glycol polymer has an upper limit of about 500,000 g/mol, or about 450,000 g/mol, or about 400,000 g/mol, or about 350,000 g/mol, or about 300,000 g/mol.

In embodiments of the disclosure, a polyalkylene glycol (PAG) has a value of x such that the weight average molecular weight, Mw of the polyethylene glycol polymer is from about 60,000 g/mol to about 500,000 g/mol, or from about 75,000 g/mol to about 500,000 g/mol, or from about 60,000 g/mol to about 450,000 g/mol, or from about 75,000 g/mol to about 450,000 g/mol, or from about 80,000 g/mol to about 500,000 g/mol, or from about 80,000 g/mol to about 450,000 g/mol, or from about 85,000 g/mol to about 500,000 g/mol, or from about 60,000 g/mol to about 400,000 g/mol, or from about 60,000 g/mol, to about 350,000 g/mol, or from about 70,000 g/mol to about 400,000 g/mol, or from about 70,000 g/mol to about 350,000 g/mol, or from about 100,000 g/mol to about 350,000 g/mol, or from about 150,000 g/mol to about 350,000 g/mol, or from about 200,000 g/mol to about 350,000 g/mol, or from about 250,000 g/mol to about 350,000 g/mol.

In embodiments of the disclosure, a polyalkylene glycol (PAG) has a value of x such that the weight average molecular weight, Mw of the polyalkylene glycol polymer is less than 20,000 g/mol, or less than 15,000 g/mol, or less than 10,000 g/mol, or less than 5,000 g/mol.

In embodiments of the disclosure, a polyalkylene glycol (PAG) has a value of x such that the weight average molecular weight, Mw of the polyalkylene glycol polymer is from about 200 g/mol to about 20,000 g/mol, or from about 400 g/mol to about 15,000 g/mol, or from about 400 g/mol to about 10,000 g/mol, or from about 400 g/mol to about 7,500 g/mol, or from about 400 g/mol to about 5,000 g/mol.

In embodiments of the disclosure, a polyalkylene glycol (PAG) has a value of x such that the weight average molecular weight, Mw of the polyalkylene glycol polymer is from about 1000 g/mol to about 20,000 g/mol, or from about 2,000 g/mol to about 20,000 g/mol, or from about 1,000 g/mol to about 15,000 g/mol, or from about 2,000 g/mol to about 15,000 g/mol, or from about 1,000 g/mol to about 10,000 g/mol, or from about 2,000 g/mol to about 10,000 g/mol.

In embodiments of the disclosure, a polyalkylene glycol (PAG) has a value of x such that the weight average molecular weight, Mw of the polyalkylene glycol polymer is from about 10,000 g/mol to about 50,000 g/mol, or from about 15,000 g/mol to about 50,000 g/mol, or from about 20,000 g/mol to about 50,000 g/mol, or from about 25,000 g/mol to about 50,000 g/mol, or from about 20,000 g/mol to about 40,000 g/mol, or from about 25,000 g/mol to about 35,000 g/mol, or from about 15,000 g/mol to about 35,000 g/mol, or from about 15,000 g/mol to about 30,000 g/mol, or from about 15,000 g/mol to about 25,000 g/mol.

In embodiments of the disclosure, a polyethylene glycol (PEG) has a value of x such that the weight average molecular weight, Mw of the polyethylene glycol polymer is at least about 20,000 g/mol, or at least about 30,000 g/mol, or at least about 40,000 g/mol, or at least about 50,000 g/mol, or at least about 60,000 g/mol.

In embodiments of the disclosure, a polyethylene glycol (PEG) has a value of x such that the weight average molecular weight, Mw of the polyethylene glycol polymer has an upper limit of about 500,000 g/mol, or about 450,000 g/mol, or about 400,000 g/mol, or about 350,000 g/mol, or about 300,000 g/mol.

In embodiments of the disclosure, a polyethylene glycol (PEG) has a value of x such that the weight average molecular weight, Mw of the polyethylene glycol polymer is from about 60,000 g/mol to about 500,000 g/mol, or from about 75,000 g/mol to about 500,000 g/mol, or from about 60,000 g/mol to about 450,000 g/mol, or from about 75,000 g/mol to about 450,000 g/mol, or from about 80,000 g/mol to about 500,000 g/mol, or from about 80,000 g/mol to about 450,000 g/mol, or from about 85,000 g/mol to about 500,000 g/mol, or from about 60,000 g/mol to about 400,000 g/mol, or from about 60,000 g/mol, to about 350,000 g/mol, or from about 70,000 g/mol to about 400,000 g/mol, or from about 70,000 g/mol to about 350,000 g/mol, or from about 100,000 g/mol to about 350,000 g/mol, or from about 150,000 g/mol to about 350,000 g/mol, or from about 200,000 g/mol to about 350,000 g/mol, or from about 250,000 g/mol to about 350,000 g/mol.

In embodiments of the disclosure, a polyethylene glycol (PEG) has a value of x such that the weight average molecular weight, Mw of the polyethylene glycol polymer is less than 20,000 g/mol, or less than 15,000 g/mol, or less than 10,000 g/mol, or less than 5,000 g/mol.

In embodiments of the disclosure, a polyethylene glycol (PEG) has a value of x such that the weight average molecular weight, Mw of the polyethylene glycol polymer is from about 200 g/mol to about 20,000 g/mol, or from about 400 g/mol to about 15,000 g/mol, or from about 400 g/mol to about 15,000 g/mol, or from about 400 g/mol to about 10,000 g/mol, or from about 400 g/mol to about 7,500 g/mol, or from about 400 g/mol to about 5,000 g/mol.

In embodiments of the disclosure, a polyethylene glycol (PEG) has a value of x such that the weight average molecular weight, Mw of the polyethylene glycol polymer is from about 1,000 g/mol to about 20,000 g/mol, or from about 2,000 g/mol to about 20,000 g/mol, or from about 1,000 g/mol to about 15,000 g/mol, or from about 2,000 g/mol to about 15,000 g/mol, or from about 1,000 g/mol to about 10,000 g/mol, or from about 2,000 g/mol to about 10,000 g/mol.

In embodiments of the disclosure, a polyethylene glycol (PEG) has a value of x such that the weight average molecular weight, Mw of the polyethylene glycol polymer is from about 10,000 g/mol to about 50,000 g/mol, or from about 15,000 g/mol to about 50,000 g/mol, or from about 20,000 g/mol to about 50,000 g/mol, or from about 25,000 g/mol to about

50,000 g/mol, or from about 20,000 g/mol to about 40,000 g/mol, or from about 25,000 g/mol to about 35,000 g/mol, or from about 15,000 g/mol to about 35,000 g/mol, or from about 15,000 g/mol to about 30,000 g/mol, or from about 15,000 g/mol to about 25,000 g/mol.

In an embodiment of the disclosure, a polyethylene glycol (PEG) has a weight average molecular weight, Mw of at least 20,000 g/mol, or at least 25,000 g/mol.

In an embodiment of the disclosure, a polyethylene glycol (PEG) has a weight average molecular weight, Mw of from about 20,000 g/mol to about 50,000 g/mol.

In embodiments of the disclosure, a polyethylene glycol (PEG) has a weight average molecular weight, Mw of from about 100,000 g/mol to about 500,000 g/mol, or from about 150,000 g/mol to about 450,000 g/mol, or from about 200,000 g/mol to about 400,000 g/mol.

In an embodiment of the disclosure, a polyethylene glycol (PEG) commercially available under the trademark POLYGLYKOL™ is used as a polymer processing aid.

In an embodiments of the disclosure, a polyethylene glycol (PEG) commercially available under the trademark CARBOWAX® or PLURIOL® is used as a polymer processing aid.

In an embodiment of the disclosure, a polymer processing aid will comprise at least two polyalkylene glycols of different weight average molecular weight, $M_w$.

In an embodiment of the disclosure, a polymer processing aid will comprise at least two polyethylene glycols of different weight average molecular weight, $M_w$.

In an embodiment of the disclosure, a polymer processing aid will comprise at least two polyethylene glycols of different weight average molecular weight, $M_w$, where a first polyethylene glycol has a weight average molecular weight, $M_w$, of less than 10,000 g/mol, and a second polyethylene glycol has weight average molecular weight, $M_w$ of greater than 25,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of less than 25,000 g/mol, and a second polyethylene glycol has weight average molecular weight, $M_w$ of at least 25,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of less than 25,000 g/mol, and a second polyethylene glycol has weight average molecular weight, $M_w$ of at least 250,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of less than 10,000 g/mol, and a second polyethylene glycol has weight average molecular weight, $M_w$ of at least 250,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of from about 2,000 to about 10,000 g/mol, and a second polyethylene glycol has weight average molecular weight, $M_w$ of from about 25,000 to about 350,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of from about 2,000 to about 10,000 g/mol, and a second polyethylene glycol has weight average molecular weight, $M_w$ of from about 15,000 to about 50,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of from about 2,000 to about 10,000 g/mol, and a second polyethylene glycol has weight average molecular weight, $M_w$ of from about 15,000 to about 25,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of from about 2,000 to about 10,000 g/mol, and a second polyethylene glycol has weight average molecular weight, $M_w$ of from about 25,000 to about 50,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of from about 2,000 to about 10,000 g/mol, and a second polyethylene glycol has weight average molecular weight, $M_w$ of from about 250,000 to about 350,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of less than 10,000 g/mol, and a second polyethylene glycol has weight average molecular weight, $M_w$ of greater than 10,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of less than about 10,000 g/mol, and a second polyethylene glycol has weight average molecular weight, $M_w$ of at least about 50,000 g/mol.

In an embodiment of the disclosure, a polymer processing aid will comprise at least two polyethylene glycols of different weight average molecular weight, $M_w$, where a first polyethylene glycol has a weight average molecular weight, $M_w$, of from about 2,000 to about 8,000 g/mol, or a first polyethylene glycol has a weight average molecular weight, $M_w$ of from 2000 to 5,000 g/mol; and a second polyethylene glycol has weight average molecular weight, $M_w$ of from about 25,000 to about 50,000 g/mol, or a second polyethylene glycol has weight average molecular weight, $M_w$ of from 15,000 to 25,000 g/mol.

In an embodiment of the disclosure, a polymer processing aid will comprise at least two polyethylene glycols of different weight average molecular weight, $M_w$, and the difference in weight average molecular weight, $M_w$ between the at least two polyethylene glycols will be in the range of from 2:1 to 100,000:1 including any sub range encompassed within this range and any value within this range. For example, in embodiments of the disclosure, a polymer processing aid will comprise at least two polyethylene glycols of different weight average molecular weight, $M_w$, and the difference in weight average molecular weight, $M_w$ between the at least two polyethylene glycols will be in the range of from 5:1 to 100,000:1, or from 2:1 to 1000:1, or from 5:1 to 1000:1, or from 2:1 to 500:1, or from 5:1 to 500:1, or from 2:1 to 100:1, or from 5:1 to 100:1.

In an embodiment of the disclosure, a polymer processing aid will comprise at least two polyethylene glycols of different weight average molecular weight, $M_w$, and the at least two polyethylene glycols having different $M_w$, will be present in a mole ratio of from 1:99 to 99:1 including any sub range encompassed within this range and any value within this range. For example, in embodiments of the disclosure, a polymer processing aid will comprise at least two polyethylene glycols of different weight average molecular weight, $M_w$, in a mole ratio of from 5:95 to 95:5, or from 10:90 to 90:10, or from 20:80 to 80:20, or from 25:75 to 75:25, or from 35:65 to 65:35, or from 40:60 to 60:40, or about 50:50.

In an embodiment of the disclosure, the amount of polyalkylene glycol (PAG) or the amount of polyethylene glycol (PEG) used as a polymer processing aid (PPA) will be from 100 to 5,000 parts per million by weight (based on the weight of a thermoplastic polyolefin such as a linear polyethylene) including any sub range within this range and any value within this range. Further optimized PPA addition levels and ranges for a given extrusion process may be readily determined by those skilled in the art. For example, in certain embodiments, the amount of polyalkylene glycol (PAG) or the amount of polyethylene glycol (PEG) used as a polymer processing aid (PPA) will be from 100 to 4,000 parts per million by weight, or 100 to 3,000 parts per million by weight, or from 200 to 3,000 parts per million by weight, or from 100 to 2,000 parts per million by weight, or from 200 to 2,000 parts per million by weight, or from 300 to 2,000 parts per million by weight, or from 400 to 2,000 parts per million by weight, or from 200 to 1,500 parts per million by weight, or from 300 to 1,500 parts per million by weight, or from 400 to 1,500 parts per million by weight, or from 200 to 1,200 parts per million by weight, or from 300 to 1,200 parts per million by weight, or from 400 to 1,200 parts per million by weight (based on the weight of the thermoplastic polyolefin such as a linear polyethylene).

In an embodiment of the disclosure, a polyalkylene glycol (PAG) or a polyethylene glycol (PEG) is added to a thermoplastic polyolefin (a linear polyethylene) using a masterbatch formulation containing the PAG or PEG. The term masterbatch is well known to persons skilled in the art. Generally, the term "masterbatch" refers to the practice of first melt mixing an additive, for example, a PEG, with a small amount of a given thermoplastic polyolefin (e.g. a linear polyethylene), followed by blending (by for example melt mixing or dry blending) the resulting "masterbatch" with the remaining bulk of the thermoplastic polyolefin (e.g. the linear polymer).

In embodiments of the disclosure, from about 0.1 to about 15.0 weight percent, or from about 0.5 to about 15.0 weight percent, or from about 0.5 to about 10.0 weight percent, or from about 0.1 to about 10.0 weight percent, or from about 0.1 to about 7.5 weight percent, or from about 0.5 to about 7.5 weight percent or from about 0.5 to about 5.0 weight percent, or from about 0.1 to about 5.0 weight percent, or from about 1.0 to about 15.0 weight percent, or from about 1.0 to about 5.0 weight percent, or from about 1.0 to about 7.5 weight percent, or from about 1.0 to about 5.0 weight percent, or from about 0.1 to about 2.5 weight percent, or from about 0.5 to about 2.5 weight percent of a masterbatch will be used in a blend with the bulk polymer (where weight percent of the masterbatch is based on the combined weight of the masterbatch and the bulk polymer).

In embodiments of the present disclosure, a masterbatch (e.g. of a linear polyethylene) may contain an amount of PAG or PEG in the range of from 500 to 50,000 parts per million by weight (based on the weight of the masterbatch) including subranges within this range and any number within this range. For example, in further embodiments of the disclosure, a masterbatch may contain an amount of PAG or PEG in the range of from 500 to 40,000 ppm, or from 500 to 35,000 ppm, or from 500 to 40,000 ppm, or from 500 to 25,000 ppm, or from 1,000 to 40,000 ppm, or from 1,000 to 35,000 ppm, or from 1,000 to 30,000 ppm, or from 1,000 to 25,000 parts per million by weight (based on the weight of the masterbatch), or from 5,000 to 25,000 ppm, or from 1,000 to 20,000 ppm, or from 2,000 to 20,000 ppm, or from 3,000 to 20,000, or from 4,000 to 20,000 ppm, or from 5,000 to 20,000 ppm, or from 5,000 to 17,500, or from 5,000 to 15,000 or from 5,000 to 12,500 ppm, or from 2,500 to 15,000 ppm, or from 5,000 to 15,000 ppm, or from 7,500 to 15,000 ppm, or from 7,500

ppm to 12,500 ppm, or from 5,000 to 50,000 ppm, or from 7,500 to 50,000 ppm, or from 10,000 to 50,000 ppm, or from 10,000 to 35,000 ppm, or from 10,000 to 25,000 ppm, or from 5,000 to 35,000 ppm, or from 5,000 to 30,000 ppm, or from 5,000 to 25,000 ppm, or from 15,000 to 30,000 ppm, or from 17,500 to 27,500 ppm, or from 20,000 to 25,000 ppm.

The polyalkylene glycol or the polyethylene glycol used as a polymer processing aid (PPA) may be used in the form of a semi solid or a viscous liquid, or as powders, pellets, or granules.

The High Pressure Low Density Polyethylene (LDPE)

In an embodiment of the present disclosure, a polymer processing aid will comprise a high pressure low density polyethylene, LDPE.

In the present disclosure, high pressure low density polyethylene (LDPE), is an ethylene homopolymer and is prepared by the free radical homopolymerization of ethylene.

Without wishing to be bound by theory, LDPE has high degrees of so called long chain branching (which may be as long as the main polymer backbone) and which gives the LDPE a non-linear microstructure. Accordingly, high pressure low density polyethylene (LDPE) is distinct from linear polyethylene which is made using ethylene polymerization catalysts, as further described below, and which has a linear polymer microstructure. Further description of the high pressure low density polyethylene, LDPE used in the present disclosure is found in the Kirk-Othmer Encyclopedia of Chemical Technology, in the chapter titled Polyethylene, Low Density by Norma Maraschin, First Published March 18, 2005.

In embodiments of the disclosure, a high pressure low density polyethylene (LDPE), is prepared in either a tubular reactor or an autoclave reactor.

A tubular reactor operates in a continuous mode and at high pressures and temperatures. Typical operating pressures for a tubular reactor are from 2,000 to 3,500 bar. Operating temperatures can range from 140 to 340°C. The reactor is designed to have a large length to diameter ratio (for example, from 400 to 40,000) and may have multiple reaction zones which take the shape of an elongated coil. High gas velocities (at least 10 m/s) are used to provide optimal heat transfer. Conversions for multi-zone systems are typically 22 to 30% per pass but can be as high as 36 to 40%. Tubular reactors may have multiple injection points for the addition of monomer or initiators to different reaction zones having different temperatures.

An autoclave reactor may have a length to diameter ratio of between 2 and 20 and may be single stage or multistage. Typically, low temperature ethylene is passed into a hot reaction zone and conversion may be controlled by the temperature differential between the incoming ethylene gas and the temperature of the autoclave reactor. Conversions are usually lower in an autoclave reactor, up to 23% per pass, than in a tubular reactor which has a higher capacity to remove the heat of polymerization. Typical operating pressures for autoclave reactors are from 1,100 to 2,000 bar. Average operating temperatures are from 220 to 300°C, but temperatures can be as high as 340°C.

A wide variety of initiators may be used with each type of reactor to initiate the free radical polymerization of ethylene. Initiators may include oxygen or one or more organic peroxides such as but not limited to di-tert-butylperoxide, cumuyl peroxide, tert-butyl-peroxypivalate, tert-butyl hydroperoxide, benzoyl peroxide, tert-amyl peroxypivalate, tert-butyl-peroxy-2-ethylhexanoate, and decanoyl peroxide. Chain transfer reagents may also be used with each type of reactor to control the polymer melt index. Chain transfer reagents include but are not limited to propane, n-butane, n-hexane, cyclohexane, propylene, 1-butene, and isobutylene.

In embodiments of the disclosure, the LDPE has a density of from about 0.910 g/cm$^3$ to about 0.940 g/cm$^3$, including sub ranges within this range or any value within this range. For example, in embodiments of the disclosure, the LDPE has a density of from about 0.914 g/cm$^3$ to about 0.930 g/cm$^3$, or from about 0.916 g/cm$^3$ to about 0.930 g/cm$^3$, or from about 0.920 g/cm$^3$ to about 0.940 g/cm$^3$, or from about 0.920 g/cm$^3$ to about 0.930 g/cm$^3$.

In embodiments, the LDPE used in the present disclosure will have a melt index, $I_2$ of from 0.1 to 20.0 g/10min, or from 0.1 to 15.0 g/10min, or from 0.1 to 10.0 g/10min.

In embodiments, the LDPE used in the present disclosure will have a melt index, $I_2$ of at least 1.0 g/10min, or at least 2.0 g/10min, or at least 2.5 g/10min, or at least 3.0 g/10min.

In embodiments, the LDPE used in the present disclosure will have a melt index, $I_2$ of from 1.0 to 10.0 g/10min, or from 1.5 to 10.0 g/10min, or from 2.0 to 10 g/10min, or from 2.5 to 10.0 g/10min, or from 3.0 to 10.0 g/10min, or from 3.5 to 10.0 g/10min, or from 4.0 to 10.0 g/10min, or from 2.5 to 9.0 g/10min, or from 2.5 to 8.5 g/10min, or from 2.5 to 8.0 g/10min, or from 3.0 to 9.0 g/10min, or from 3.0 to 8.5 g/10min, or from 3.0 to 8.0 g/10min, or from 3.5 to 9.0 g/10min, or from 3.5 to 8.5 g/10min, or from 3.5 to 8.0 g/10min, or from 4.0 to 9.0 g/10min, or from 4.0 to 8.5 g/10min or from 4.0 to 8.0 g/10min.

In embodiments, the LDPE used in the present disclosure will have a melt index, $I_2$ of below 1.0 g/10 min. Such a LDPE may be referred to as a "frac melt" LDPE material. In further embodiments, the LDPE used in the present disclosure will have a melt index, $I_2$ of from 0.01 to 1.0 g/10 min, or from 0.01 to below 1.0 g/10min.

In embodiments of the disclosure, a high pressure low density polyethylene (LDPE) is a blend of LDPE materials having different densities and/or different melt indices, $I_2$'s.

In an embodiment, low density polyethylene LDPE, is a blend of LDPE made in a tubular reactor and LDPE made in an autoclave reactor.

In an embodiment, a LDPE polymer blend is prepared by physically blending different high pressure LDPEs (e.g. a LDPE produced in a tubular reactor with the LDPE produced in an autoclave reactor). Physically blending is meant to encompass those processes in which two or more individual ethylene homopolymers are mixed after they are removed from a polymerization reaction zone. Physically blending of the individual LDPEs may be accomplished by dry blending (e.g. tumble blending), extrusion blending (coextrusion), solution blending, melt blending or any other similar blending technique known to those skilled in the art.

Polydispersity, $M_w/M_n$ also known as molecular weight distribution (MWD), is defined as the weight average molecular weight, $M_w$ divided by the number average molecular weight, $M_n$. The MWD of LDPE may in embodiments the disclosure be determined by gel permeation chromatography (GPC)-viscometry. The GPC-viscometry technique was based on the method of ASTM D6474-99 and uses a dual refractometer/viscometer detector system to analyze polymer samples. This approach allows for the online determination of intrinsic viscosities and is well known to those skilled in the art.

In embodiments of the disclosure, the LDPE has a MWD of greater than about 5.0. In embodiments of the disclosure, the LDPE has a MWD of from about 8.0 to about 30.0.

The molecular weight of the of the LDPE or blends thereof can further be described as unimodal, bimodal or multimodal. By using the term "unimodal", it is meant that the molecular weight distribution, can be said to have only one maximum in a molecular weight distribution curve. A molecular weight distribution curve can be generated according to the method of ASTM D6474-99. By using the term "bimodal", it is meant that the molecular weight distribution, can be said to have two maxima in a molecular weight distribution curve. The term "multi-modal" denotes the presence of more than two maxima in such a curve.

In embodiments of the disclosure, the LDPE used has a unimodal, bimodal or multimodal molecular weight distributions.

In an embodiment of the disclosure, the LDPE used is made in a tubular reactor and has a multimodal molecular weight distribution.

In embodiments of the disclosure, the LDPE used is made in an autoclave reactor and has a bimodal or multimodal molecular weight distribution.

In an embodiment of the disclosure, a blend of LDPEs is used and the blend has a multimodal molecular weight distribution.

Antioxidants packages for stabilizing LDPE in embodiments of the disclosure are well known in the art and may include a phenolic and a phosphite compound. Two non-limiting examples of a phenolic and phosphite stabilizer which may be added to a LDPE in embodiments of the disclosure are sold under the trade names IRGANOX® 1076 and IRGAFOS® 168 respectively. The phenolic compound is sometimes referred to as the "primary" antioxidant. The phosphite compound is sometimes referred to as the "secondary" antioxidant.

In embodiments of the disclosure, the levels of antioxidant present in a LDPE are from 0 to 2,000 parts per million, ppm, by weight (based on the weight of the LDPE). In further embodiments, the amounts of antioxidant present in a LDPE are from 0 to 1000 ppm, or from 0 to 500 ppm, or from 0 to 300 ppm, by weight (based on the weight of the LDPE).

In embodiments of the disclosure, the LDPE may be used in the form of powders, pellets, granules, or in any other extrudable form.

In the present disclosure, the amount of LDPE used as a polymer processing aid is relatively low relative to the weight of the bulk thermoplastic polyolefin material (e.g. the linear polyethylene). Accordingly, in embodiments of the disclosure, the LDPE is used in an amount which makes up from 1.0 to 25.0 weight percent of the total weight of the LDPE and the bulk thermoplastic polyolefin (e.g. a linear polyolefin), including sub ranges within this range and any value within this range. For example, in embodiments of the disclosure, the amount of LDPE will make up from 1.0 to 20.0 weight percent, or from 3.0 to 20.0 weight percent, or from 5.0 to 20.0 weight percent, or from 5.0 to 15.0 weight percent, or from 5.0 to 12.5 weight percent, or from 7.5 to 12.5 weight percent, or from 7.5 to 15.0 weight percent, or from 7.5 to 20.0 weight percent, or from 3.0 to 17.5 weight percent, or from 3.0 to 15.0 weight percent, or from 2.5 to 20.0 weight percent, or from 2.5 to 15.0 weight percent, or from 2.5 to 12.5 weight percent, or from 3.0 to 12.5 weight percent, or from greater than 0 to 20.0 weight percent, or from greater than 0 to 15.0 weight percent of from greater than 0 to 12.5 weight percent, of the total weight of the LDPE and the thermoplastic polyolefin (e.g. the linear polyethylene).

The Thermoplastic Polyolefin (E.g. A Linear Polyethylene)

The disclosure is useful for extrudable thermoplastic polyolefins in general but in an embodiment, the disclosure is particularly well suited for improving the extrusion of linear polyethylenes.

As described herein, an extrudable or extruded thermoplastic composition (an "extrudate") may comprise: i) a linear polyethylene, ii) a poly(ether-block-amide) copolymer comprising blocks of polyamide and polyether, and iii) a

polycaprolactone polymer; but may be substantially free of fluoroelastomers, fluoropolymers, and other perfluorinated alkane derivatives.

As described herein, an extrudable or extruded thermoplastic composition (an "extrudate") may comprise: i) a linear polyethylene; ii) a poly(ether-block-amide) copolymer comprising blocks of polyamide and polyether; iii) a polycaprolactone polymer; and iv) a poly(oxyalkylene) polymer, but may be substantially free of fluoroelastomers, fluoropolymers, and other perfluorinated alkane derivatives.

As described herein, an extrudable or extruded thermoplastic composition (an "extrudate") may comprise: i) a linear polyethylene; ii) a poly(ether-block-amide) copolymer comprising blocks of polyamide and polyether; iii) a polycaprolactone polymer; and iv) a polyethylene glycol, but may be substantially free of fluoroelastomers, fluoropolymers, and other perfluorinated alkane derivatives.

In an embodiment of the present disclosure, an extrudable or extruded thermoplastic composition (an "extrudate") further comprises a high pressure low density polymer (LDPE), in an amount of from 1.0 to 25.0 weight percent based on the weight of the linear polyethylene.

By "substantially free" it is meant that fluoroelastomers, fluoropolymers, and other perfluorinated alkane derivatives will be present in amounts below that which can improve the melt defect (e.g. melt fracture) performance of a thermoplastic composition during a melt extrusion process. In embodiments of the disclosure, fluoroelastomers, fluoropolymers, and other perfluorinated alkane derivatives, will be less than about 1 percent by weight, or less than about 0.5 percent by weight, or less than 0.1 percent by weight, or less than 500 parts per million, or less than 100 ppm, or less than 90 ppm, or less than 75 ppm, or less than 50 ppm, or less than 25 ppm, or less than 10 ppm, or about 0 weight percent, or about 0 ppm, of an extrudable or extruded thermoplastic composition.

In an embodiment of the present disclosure, a major or predominant component in an extrudable or extruded thermoplastic composition (an "extrudate") will be a linear polyethylene. In embodiments, such an "extrudate" will comprise a linear polyethylene in an amount of at least about 70% by weight, or at least about 75% by weight, or at least about 80% by weight, or at least about 85% by weight, of the extrudate composition.

The extrudable or extruded thermoplastic composition (an "extrudate") may, in embodiments of the disclosure, comprise a mixture of more than one different type of linear polyethylene.

A linear polyethylene is distinct from a high pressure low density polyethylene, LDPE, which (by virtue of the presence of large amounts of long chain branching) has a branched polymer microstructure and is made in a high pressure free radical polymerization process. Linear polyethylene is made using transition metal based olefin polymerization catalysts and has a linear polymer microstructure.

Olefin polymerization catalysts for use in the preparation of linear polyethylene are well known in the art: linear polyethylene can be made using so called single site polymerization catalysts, or multi-site polymerization catalysts. Multi-site polymerization catalysts, such as Ziegler-Natta catalysts and Phillips (chromium based) catalysts are well known by persons skilled in the art. Single site catalysts, such as metallocene catalysts, constrained geometry catalysts, phosphinimine catalysts, and catalysts having tetradentate ligands, are also well known by persons skilled in the art.

Linear polyethylenes include homogeneously branched linear ethylene polymers such as those described in U.S. Pat. No. 3,645,992; heterogeneously branched linear ethylene polymers such as those described in U.S. Pat. No. 4,076,698; and homogeneously branched linear ethylene polymers containing long chain branching (but less long chain branching than a LDPE), sometimes referred to as "substantially linear ethylene polymers" which are described in U.S. Pat. Nos. 5,272,236, 5,278,272, 5,582,923, and 5,733,155; and/or blends thereof.

The term "homogeneously branched" refers to linear ethylene copolymers in which the $\alpha$-olefin comonomer is randomly distributed within the copolymer molecule, substantially all of the copolymer molecules have the same ethylene-to-$\alpha$-olefin monomer ratio, and the ethylene copolymer is characterized by a relatively narrow short chain branching distribution as indicated by, for example, a composition distribution index, $CDBI_{50}$ of greater than about 50 percent by weight, or in some embodiments greater than about 75 percent by weight, or greater than about 80 percent by weight, or greater than about 90 percent by weight. Homogeneously branched ethylene copolymers are generally prepared using single site olefin polymerization catalysts.

The term "heterogeneously branched" is used herein to refer to linear ethylene copolymers characterized by a relatively broad short chain branching distribution as indicated by, for example, a composition distribution index, $CDBI_{50}$ of less than about 75 percent by weight, or in some embodiments less than about 50 percent by weight. Heterogeneously branched ethylene copolymers are generally prepared using multi-site olefin polymerization catalysts.

As described herein, a linear polyethylene may be selected from ethylene homopolymers and copolymers comprising polymerized units having the general formula $CH_2=CHR^3$, wherein $R^3$ is a hydrogen or an alkyl group. $R^3$ may be a hydrocarbon group having up to 10 carbon atoms. $R^3$ may be a hydrocarbon group having from one to six carbon atoms, and may for example be an aromatic group such as a phenyl group (i.e. styrene as alpha olefin), or a n-hexyl group (i.e. 1-octene as alpha olefin).

As described herein, a linear polyethylene may be an ethylene homopolymer or an ethylene copolymer.

As described herein, an ethylene copolymer may comprise polymerized ethylene and one or more than one

polymerized alpha olefin selected from the group comprising $C_3$-$C_{12}$ alpha olefins.

As described herein, an ethylene copolymer may comprise polymerized ethylene and one or more than one polymerized alpha olefin selected from the group comprising $C_3$-$C_{12}$ alpha olefins, and polymerized ethylene may comprise at least 85 weight percent of the ethylene copolymer.

As described herein, an ethylene copolymer may comprise polymerized ethylene and one or more than one polymerized alpha olefin selected from the group comprising $C_3$-$C_{12}$ alpha olefins, and polymerized ethylene may comprise at least 90 weight percent of the ethylene copolymer.

As described herein, an ethylene copolymer may comprise polymerized ethylene and one or more than one polymerized alpha olefin selected from the group comprising propylene, 1-butene, 1-hexene, 1-octene, 1-decene, 4-methyl-1-pentene, and 1-octadecene.

As described herein, an ethylene copolymer may comprise polymerized ethylene and one or more than one polymerized alpha olefin selected from the group comprising 1-butene, 1-hexene, and 1-octene.

As described herein, an ethylene copolymer may comprise polymerized ethylene and one or more than one alpha olefin selected from the group comprising 1-butene, 1-hexene, and 1-octene, and polymerized ethylene may comprise at least 85 weight percent of the ethylene copolymer.

As described herein, an ethylene copolymer may comprise polymerized ethylene and one or more than one polymerized alpha olefin selected from the group comprising 1-butene, 1-hexene, and 1-octene, and polymerized ethylene may comprise at least 90 weight percent of the ethylene copolymer.

The linear polyethylene may be prepared by using one or more olefin polymerization catalysts in any conventionally known processes, such as gas phase polymerization, slurry phase polymerization or solution phase polymerization.

In a gas phase polymerization process, a transition metal polymerization catalyst may be immobilized on a suitable support material, and the resulting particulate catalyst may be employed in a fluidized bed polymerization process. In general, a fluidized bed gas phase polymerization reactor employs a "bed" of polymer and catalyst particles which is fluidized by a flow of monomer and other optional components which are at least partially gaseous. Heat is generated by the enthalpy of polymerization of the monomer (and optional comonomer(s)) flowing through the bed. Un-reacted monomer and other optional gaseous components exit the fluidized bed and are contacted with a cooling system to remove this heat. The cooled gas stream, including monomer, and optional other components (such as condensable liquids), is then re-circulated through the polymerization zone, together with "make-up" monomer to replace that which was polymerized on the previous pass. Simultaneously, polymer product is withdrawn from the reactor. As will be appreciated by those skilled in the art, the "fluidized" nature of the polymerization bed helps to evenly distribute/mix the heat of reaction and thereby minimize the formation of localized temperature gradients.

In embodiments, the reactor pressure in a gas phase process may vary from about atmospheric to about 600 psig. In another embodiment, the pressure can range from about 100 psig (690 kPa) to about 500 psig (3448 kPa). In yet another embodiment, the pressure can range from about 200 psig (1379 kPa) to about 400 psig (2759 kPa). In still another embodiment, the pressure can range from about 250 psig (1724 kPa) to about 350 psig (2414 kPa).

In a slurry phase polymerization process, a transition metal polymerization catalyst may be immobilized on a suitable support material, and the resulting particulate catalyst may be employed in a slurry phase polymerization process. Slurry phase polymerization processes are conducted in the presence of a hydrocarbon diluent such as an alkane (including for example isoalkanes), an aromatic or a cycloalkane. The diluent may also be the alpha olefin comonomer used in copolymerizations. Some non-limiting alkane diluents include propane, butanes, (i.e. normal butane and/or isobutane), pentanes, hexanes, heptanes and octanes. The monomers may be soluble in (or miscible with) the diluent, but the polymer is not (under polymerization conditions). In embodiments, the polymerization temperature is from about 5°C to about 200°C, or less than about 120°C, or from about 10°C to about 100°C. The reaction temperature is selected so that an ethylene or alpha olefin homopolymer or copolymer is produced in the form of solid particles. The reaction pressure is influenced by the choice of diluent and reaction temperature. For example, in embodiments, the pressures may range from 15 to 45 atmospheres (about 220 to 660 psi or about 1,500 to about 4,600 kPa) when isobutane is used as diluent to approximately twice that (i.e. from 30 to 90 atmospheres - about 440 to 1,300 psi or about 3,000-9,100 kPa) when propane is used. The pressure in a slurry process must be kept sufficiently high to keep at least part of the ethylene and/or alpha olefin to be polymerized in the liquid phase. The reaction typically takes place in a jacketed closed loop reactor having an internal stirrer (e.g., an impeller) and at least one settling leg. Catalyst, monomers and diluents are fed to the reactor as liquids or suspensions. The slurry circulates through the reactor and the jacket is used to control the temperature of the reactor. Through a series of letdown valves the slurry enters a settling leg and then is let down in pressure to flash the diluent and unreacted monomers and recover the polymer generally in a cyclone. The diluent and unreacted monomers are recovered and recycled back to the reactor.

Solution polymerization processes for the polymerization or copolymerization of olefins such as ethylene and alpha olefins are well known in the art. Solution processes are generally conducted in the presence of an inert hydrocarbon solvent in which the resultant polyolefin is soluble under the polymerization conditions employed. In an embodiment of the

disclosure the solvent used in a solution phase polymerization process is selected from the group consisting of $C_{5-12}$ hydrocarbons which may be unsubstituted or substituted by $C_{1-4}$ alkyl group, and include hydrocarbon solvents such as pentane, methyl pentane, hexane, heptane, octane, cyclohexane, methylcyclohexane and hydrogenated naphtha. Another example of a suitable solvent for use in embodiments of the present disclosure and which is commercially available is "ISOPAR® E" ($C_{8-12}$ aliphatic solvent, Exxon Chemical Co.). The polymerization temperature in a conventional solution process may be from about 80°C to about 300°C. In an embodiment of the disclosure the polymerization temperature in a solution process is from about 120°C to about 250°C. The polymerization pressure in a solution process may be a "medium pressure process", meaning that the pressure in the reactor is less than about 6,000 psi (about 42,000 kiloPascals or kPa). In an embodiment of the disclosure, the polymerization pressure in a solution process may be from about 10,000 to about 40,000 kPa, or from about 14,000 to about 22,000 kPa (i.e., from about 2,000 psi to about 3,000 psi).

In solution polymerization, the monomers are dissolved/dispersed in the solvent either prior to being fed to the reactor (or for gaseous monomers the monomer may be fed to the reactor so that it will dissolve in the reaction mixture). Prior to mixing, the solvent and monomers are generally purified to remove potential catalyst poisons such as water, oxygen or metal impurities. The feedstock purification follows standard practices in the art, e.g., molecular sieves, alumina beds and oxygen removal catalysts are used for the purification of monomers. The solvent itself as well (e.g., methyl pentane, cyclohexane, hexane or toluene) may be treated in a similar manner.

The feedstock may be heated or cooled prior to feeding to the reactor.

Generally, the olefin polymerization catalyst components (e.g. the olefin polymerization catalyst molecule, an ionic activator and optionally an alkylaluminoxane) may be premixed in the solvent for the reaction or fed as separate streams to a solution phase polymerization reactor. In some instances, premixing may be desirable to provide a reaction time for the catalyst components prior to entering the reaction. Such an "in line mixing" technique is described in a U.S. Pat. No. 5,589,555.

Solution phase polymerization processes can be carried out in one or more stirred tank reactors (e.g., a continuously stirred tank reactor) or loop reactors, and these reactors can be configured in series or in parallel with one another.

Examples of well-known linear polyethylenes, employed in embodiments of the present disclosure include, linear low density polyethylene (LLDPE), medium density polyethylene (MDPE), high density polyethylene (HDPE), and very low density polyethylene (VLDPE).

In the present disclosure, a high density polyethylene (HDPE) is an ethylene homopolymer or an ethylene copolymer with another alpha olefin (such as, for example, 1-butene, 1-hexene, and/or 1-octene) and has a density of about 0.949 g/cm$^3$ or greater. In embodiments, a HDPE is an ethylene homopolymer or an ethylene copolymer with another alpha olefin (such as, for example, 1-butene, 1-hexene, and/or 1-octene) having a density of at least 0.950 g/cm$^3$, or at least 0.951 g/cm$^3$, or at least 0.952 g/cm$^3$, or at least 0.953 g/cm$^3$. In embodiments, a HDPE is an ethylene homopolymer or an ethylene copolymer with another alpha olefin (such as, for example, 1-butene, 1-hexene, and/or 1-octene) having a density of from about 0.950 g/cm$^3$ to about 0.970 g/cm$^3$, or from about 0.950 g/cm$^3$ to about 0.965 g/cm$^3$.

In the present disclosure, linear low density polyethylene (LLDPE) is an ethylene copolymer with another alpha olefin (such as, for example, 1-butene, 1-hexene, and/or 1-octene) and has a density of from about 0.910 g/cm$^3$ to about 0.940 g/cm$^3$ including subranges within this range or any value within this range. In embodiments of the disclosure a LLDPE has a density of from 0.910 to 0.936 g/cm$^3$, or from 0.912 to 0.936 g/cm$^3$, or from 0.910 to 0.932 g/cm$^3$, or from 0.912 to 0.932 g/cm$^3$.

In the present disclosure, medium density polyethylene (MDPE) is an ethylene copolymer with another alpha olefin (such as, for example, 1-butene, 1-hexene, and/or 1-octene) and has a density of from about 0.940 g/cm$^3$ to about 0.949 g/cm$^3$ including subranges within this range or any value within this range.

In the present disclosure, very low density polyethylene is an ethylene copolymer with another alpha olefin (such as propylene, 1-butene, 4-methyl-1-pentene, 1-hexene, and/or 1-octene) and has a density of less than about 0.910 g/cm$^3$ and may include so called elastomers and plastomers. In embodiments, a VLDPE is an ethylene copolymer with another alpha olefin (such as, for example, propylene, 1-butene, 4-methyl-1-pentene 1-hexene, and/or 1-octene) having a density of from about 0.880 g/cm$^3$ to about 0.910 g/cm$^3$, or from about 0.880 g/cm$^3$ to about 0.905 g/cm$^3$, or from about 0.880 g/cm$^3$ to about 0.902 g/cm$^3$.

In embodiments of the disclosure, a linear polyethylene has a density of from 0.900 to 0.955 g/cm$^3$, or from 0.900 to 0.950 g/cm$^3$.

In an embodiment of the disclosure, a linear polyethylene is selected from the group consisting of linear low density polyethylene (LLDPE), medium density polyethylene (MDPE), high density polyethylene (HDPE), very low density polyethylene (VLDPE) and mixtures thereof.

Depending on the types of polymerization process and olefin polymerization catalyst used, in embodiments of the disclosure, the linear polyethylene may have a weight average molecular weight, $M_w$ of at least about 10,000 g/mol, and up to about 1,500,000 g/mol including any sub range within this range or any value within this range. For example, in further embodiments, the linear polyethylene has a weight average molecular weight, Mw, of from about 50,000 to about

1,000,000 g/mol, or from about 100,000 to about 1,000,000 g/mol, or from about 75,000 to about 750,000 g/mol, or from about 100,000 to about 750,000 g/mol, or from about 75,000 to about 500,000 g/mol, or from about 100,000 to about 500,000 g/mol, or from about 50,000 to about 350,000 g/mol, or from about 75,000 to about 350,000 g/mol, or from about 100,000 to about 350,000 g/mol, or from about 50,000 to about 300,000 g/mol, or from about 75,000 to about 300,000 g/mol, or from about 100,000 to about 300,000 g/mol, or from about 50,000 to about 250,000 g/mol, or from about 75,000 to about 250,000 g/mol, or from about 100,000 to about 250,000 g/mol.

In embodiments of the disclosure, the linear polyethylene has a molecular weight distribution, $M_w/M_n$ of from about 2.0 to about 12.0, including sub ranges within this range or any value within this range. For example, in embodiments of the disclosure, the linear polyethylene has a $M_w/M_n$ value of from about 2.0 to about 10.0, or from about 2.0 to about 8.0, or from about 2.0 to about 5.0.

In embodiments of the disclosure, a linear polyethylene is characterized by its melt index, $I_2$, as determined by ASTM D1238, Condition E, at 190°C. In embodiments of the disclosure, a linear polyethylene has a melt index, $I_2$ of from 0.1 to 20.0 g/10min, including any sub range within this range or any value within this range. For example, in embodiments of the disclosure, a linear polyethylene has a melt index, $I_2$ of from 0.1 to 15.0 g/10min, or from 0.1 to 10.0 g/10min, or from 0.3 to 15.0 g/10min, or from 0.3 to 10.0 g/10min, or from 0.1 to 5.0 g/10min or from 0.3 to 5.0 g/10min, or from 0.5 to 15.0 g/10min, or from 0.5 to 10.0 g/10min, or from 0.5 to 5.0 g/10min.

In embodiments of the disclosure, a linear polyethylene selected from the group consisting of LLDPE, MDPE, HDPE, VLPDE and mixtures thereof, may be used in the form of powders, pellets, granules, or in any other extrudable form.

In embodiments of the disclosure, a linear polyethylene is a LLDPE.

In embodiments of the disclosure, a linear polyethylene is a LLDPE having a melt index, $I_2$ of from 0.1 to 10.0 g/10min, or from 0.5 to 5.0 g/10min.

In an embodiment of the disclosure, a linear polyethylene is a LLDPE having a density of from about 0.910 g/cm$^3$ to about 0.936 g/cm$^3$ and a melt index, $I_2$ of from 0.1 to 10.0 g/10min.

In an embodiment of the disclosure, a linear polyethylene is a LLDPE having a density of from about 0.910 g/cm$^3$ to about 0.936 g/cm$^3$ and a melt index, $I_2$ of from 0.1 to 5.0 g/10min.

In embodiments of the disclosure, a linear polyethylene is a LLDPE having a molecular weight distribution, $M_w/M_n$ of from about 2.0 to about 12.0, including sub ranges within this range or any value within this range. For example, in embodiments of the disclosure, a LLDPE has a $M_w/M_n$ value of from about 2.0 to about 10.0, or from about 2.0 to about 8.0, or from about 2.0 to about 5.0.

In some embodiments of the disclosure, a linear polyethylene will comprise small amounts, defined as < 3.0 weight percent (wt%, based on the total weight of the linear polymer and the LDPE) of a high pressure low density polyethylene, LDPE having a melt index of below about 1.0 g/10min. In some embodiments of the disclosure, a homogeneously branched linear polyethylene will comprise small amounts, defined as < 3.0 weight percent (wt%, based on the total weight of the linear polymer and the LDPE), of a high pressure low density polyethylene, LDPE having a melt index of below about 1.0 g/10min. Without wishing to be bound by theory, the presence of small amounts of a LDPE having a melt index of below about 1.0 g/10min may be useful in various end use applications.

The present disclosure is directed to the extrusion of thermoplastic compositions in a wide variety of extrusion processes such as profile extrusion in which an extruded part such as a pipe or profiled part is prepared by extruding molten plastic through a shaped die) and film extrusion (in which plastic film is prepared by extruding molten plastic through a slit or annular die).

In an embodiment of the disclosure, a film extrusion process, such as for example, a "blown film" extrusion process is employed. Such a blown film extrusion process is described in more detail below in the Examples section.

For film applications, in an embodiment of the disclosure, it is preferable that no pigment or filler is added to the polyolefin (e.g. the linear polyethylene) in order to produce extruded film which clear or relatively clear. In other applications such as wire and cable (electrical or optical), in an embodiment of the disclosure, the polyolefin (e.g. linear polyethylene) may contain a pigment/filler such as carbon black and other adjuvants.

The thermoplastic polyolefin, such as a linear polyethylene, used in the present disclosure may further include fillers, antioxidants (such as a primary and optionally a secondary antioxidant), pigments, opacifying agents, static control agents such as glycerol monostearate, lubricants such as fatty acid esters, light stabilizers (such as hindered amine light stabilizers), zinc oxide, antiblock agents and other adjuvants. Some care must be taken when using antiblock agents (such as silica or talc) and/or hindered amine light stabilizers as these may have an adverse effect upon the surface appearance of an extrudate composition comprising a polyolefin, as is known to persons skilled in the art.

In embodiments of the disclosure, an antioxidant (a primary antioxidant alone or optionally a primary antioxidant in combination with a secondary antioxidant) is added to a polyolefin (e.g. a linear polyethylene) and is added in an amount from about 0.01 to about 2 weight percent, or from about 0.01 to about 1 weight percent.

In an embodiment a linear polyethylene comprises a primary antioxidant, and a secondary antioxidant.

In an embodiment a linear polyethylene comprises a hindered phenol primary antioxidant, and a phosphorus-containing secondary antioxidant.

Further description of additives which may in embodiments be added to a thermoplastic polyolefin, such as a linear polyethylene are provided below, including: primary antioxidants; secondary antioxidants; UV absorbers and light stabilizers; polyamide stabilizers; basic co-stabilizers; nucleating agents; slip agents; fillers, antiblocking agents, and reinforcing agents, and various further miscellaneous additives.

In embodiments of the disclosure, the additives added to a thermoplastic polyolefin (e.g., a linear polyethylene) may be used in an amount of from 100 to 5,000 ppm, or from 100 to 3,000 ppm, or from 200 to 3,000 ppm, or from 200 to 2,000 ppm, or from 300 to 1,500 ppm, or from 400 to 1,200 ppm (based on the weight of the thermoplastic polyolefin).

Primary Antioxidants

In embodiments of the disclosure, a primary antioxidant is selected from alkylated mono-phenols (also described herein as "hindered phenol primary antioxidants") such as, for example: 2,6-di-tert-butyl-4-methylphenol; 2-tert-butyl-4,6-dimethylphenol; 2,6-di-tert-butyl-4-ethylphenol; 2,6-di-tert-butyl-4-n-butylphenol; 2,6-di-tert-butyl-4isobutylphenol; 2,6-dicyclopentyl-4-methylphenol; 2-(alpha.-methylcyclohexyl)-4,6 dimethylphenol; 2,6-dioctadecyl-4-methylphenol; 2,4,6,-tricyclohexyphenol; and 2,6-di-tert-butyl-4-methoxymethylphenol. Suitable hindered phenolic antioxidants which can be used in embodiments of the disclosure, are sold under the trademarks IRGANOX® 1010 (CAS Registry number 6683-19-8) and IRGANOX 1076 (CAS Registry number 2082-79-3) by BASF Corporation.

In embodiments of the disclosure, a primary antioxidant is selected from alkylated hydroquinones. such as for example: 2,6-di-tert-butyl-4-methoxyphenol; 2,5-di-tert-butylhydroquinone; 2,5-di-tert-amyl-hydroquinone; and 2,6-diphenyl-4-octadecyloxyphenol.

In embodiments of the disclosure, a primary antioxidant is selected from hydroxylated thiodiphenyl ethers, such as, for example: 2,2'-thio-bis-(6-tert-butyl-4-methylphenol); 2,2'-thio-bis-(4-octylphenol); 4,4'thio-bis-(6-tertbutyl-3-methylphenol); and 4,4'-thio-bis-(6-tert-butyl-2-methylphenol).

In embodiments of the disclosure, a primary antioxidant is selected from alkylidene-bisphenols, such as, for example, 2,2'-methylene-bis-(6-tert-butyl-4-methylphenol); 2,2'-methylene-bis-(6-tert-butyl-4-ethylphenol); 2,2'-methylene-bis-(4-methyl-6-(alpha-methylcyclohexyl)phenol); 2,2'-methylene-bis-(4-methyl-6-cyclohexyiphenol); 2,2'-methylene-bis-(6-nonyl-4-methylphenol); 2,2'-methylene-bis-(6-nonyl-4methylphenol); 2,2'-methylene-bis-(6-(alpha-methylbenzyl)-4-nonylphenol); 2,2'-methylene-bis-(6-(alpha, alpha-dimethylbenzyl)-4-nonyl-phenol); 2,2'-methylene-bis-(4,6-di-tert-butylphenol); 2,2'-ethylidene-bis-(6-tert-butyl-4-isobutylphenol); 4,4'methylene-bis-(2,6-di-tert-butylphenol); 4,4'-methylene-bis-(6-tert-butyl-2-methylphenol); 1,1-bis-(5-tert-butyl-4-hydroxy-2-methylphenol)butane 2,6-di-(3-tert-butyl-5-methyl-2-hydroxybenzyl)-4-methylphenol; 1,1,3-tris-(5-tert-butyl-4-hydroxy-2-methylphenyl)butane; 1,1-bis-(5-tert-butyl-4-hydroxy2-methylphenyl)-3-dodecyl-mercaptobutane; ethyleneglycol-bis-(3,3,-bis-(3'-tert-butyl-4'-hydroxyphenyl)-butyrate)-di-(3-tert-butyl-4-hydroxy-5-methylpenyl)-dicyclopentadiene; di-(2-(3'-tert-butyl-2'hydroxy-5'methylbenzyl)-6-tert-butyl-4-methylphenyl)terephthalate; and other phenolics such as monoacrylate esters of bisphenols such as ethylidene bis-2,4-di-t-butylphenol monoacrylate ester.

In embodiments of the disclosure, a primary antioxidant is selected from benzyl compounds, such as for example, 1,3,5-tris-(3,5-di-tert-butyl-4-hydroxybenzyl)-2,4,6-trimethylbenzene; bis-(3,5-di-tert-butyl-4-hydroxybenzyl) sulfide; isooctyl 3,5-di-tert-butyl-4-hydroxybenzyl-mercaptoacetate; bis-(4-tert-butyl-3hydroxy-2,6-dimethylbenzyl) dithiol-terephthalate; 1,3,5-tris-(3,5-di-tert-butyl-4,10 hydroxybenzyl)isocyanurate; 1,3,5-tris-(4-tert-butyl-3-hydroxy-2,6-dimethylbenzyl)isocyanurate; dioctadecyl 3,5-di-tert-butyl-4-hydroxybenzylphosphonate; calcium salt of monoethyl 3,5-di-tertbutyl-4-hydroxybenzylphosphonate; and 1,3,5-tris-(3,5-dicyclohexyl-4-hydroxybenzyl)isocyanurate.

In embodiments of the disclosure, a primary antioxidant is selected from acvlaminophenols, such as for example, 4-hydroxy-lauric acid anilide; 4-hydroxy-stearic acid anilide; 2,4-bis-octylmercapto-6-(3,5-tert-butyl-4-hydroxyanilino)-s-triazine; and octyl-N-(3,5-di-tert-butyl-4-hydroxyphenyl)-carbamate.

In embodiments of the disclosure, a primary antioxidant is selected from esters of beta-(5-tert-butyl-4-hydroxy-3-methylphenyl)-propionic acid with monohydric or polyhydric alcohols, such as for example, methanol; diethyleneglycol; octadecanol; triethyleneglycol; 1,6-hexanediol; pentaerythritol; neopentylglycol; tris-hydroxyethyl isocyanurate; thidiethyleneglycol; and dihydroxyethyl oxalic acid diamide.

In embodiments of the disclosure, a primary antioxidant is selected from amides of beta-(3,5-di-tert-butyl-4-hydroxyphenol)-propionic acid, such as for example, N,N'-di-(3,5-di-tert-butyl-4-hydroxyphenylpropionyl)-hexamethylendiamine; N,N'-di-(3,5-di-tert-butyl-4-hydroxyphenylpropionyl) trimethylenediamine; and N,N'-di(3,5-di-tert-butyl-4-hydroxyphenylpropionyl)-hydrazine.

In embodiments of the disclosure, the primary antioxidant may be used in an amount of from 100 to 5,000 ppm, or from 100 to 3,000 ppm, or from 200 to 3,000 ppm, or from 200 to 2,000 ppm, or from 300 to 1,500 ppm, or from 400 to 1,200 ppm (based on the weight of the thermoplastic polyolefin).

Secondary Antioxidants

In embodiments of the disclosure, a secondary antioxidant is selected from phosphites and phosphonites (also described herein as "phosphorus containing secondary antioxidants"), such as, for example, triphenyl phosphite; diphenylalkyl phosphites; phenyldialkyl phosphites; tris (nonyl-phenyl)phosphite [WESTON® 399, available from SI Group]; phosphorous acid, mixed 2,4-bis(1,1-dimethylpropyl)phenyl and 4-(1,1-dimethylpropyl)phenyl triesters [WESTON 705, CAS Reg. No. 939402-02-5, available from SI Group]; trilauryl phosphite; trioctadecyl phosphite; distearyl pentaerythritol diphosphite; tris(2,4-di-tert-butylphenyl)phosphite [IRGAFOS 168, available from BASF]; diisodecyl pentaerythritol diphosphite; 2,4,6-tri-tert-butylphenyl-2-butyl-2-ethyl-1,3-propanediol phosphite; bis(2,4-di-tert-butyl-6-methylphenyl) ethyl phosphite [IRGAFOS 38, available from BASF]; 2,2',2''-nitrilo[triethyltris(3,3'5,5'-tetra-tert-butyl-1,1'-biphenyl-2,2'-diyl) phosphite [IRGAFOS® 12, available from BASF]; bis(2,4-di-tert-butylphenyl)pentaerythritol diphosphite tristearyl sorbitol triphosphite; tetrakis(2,4-di-tert-butylphenyl)4,4'-biphenylene diphosphonate; 6-[3-(3-tert-butyl-4-hydroxy-5-methylphenyl)propoxy]-2,4,8,10-tetra-tert-butyldibenzo[d,f][1 ,3,2] dioxaphospepin [SUMILIZER® GP]; bis(2,4,6-tri-tert-butylphenyl) pentaerythritol diphosphate; bis(2,4-dicumylphenyl)pentaerythritol diphosphate; distearyl pentaerythritol diphosphate; diisodecyl pentaerythritol diphosphate; bis(2,4 di-tert-butylphenyl) pentaerythritol diphosphite [ULTRANOX® 626, available from SI Group]; bis(2,6-di-tert-butyl-4-methylpenyl) pentaerythritol diphosphite; bisisodecyloxy-pentaerythritol diphosphite; bis(2,4-di-tert-butyl-6-methylphenyl) pentaerythritol diphosphite; bis(2,4,6-tri-tert-butylphenyl) pentaerythritol diphosphite; tetrakis(2,4-di-tert-butylphenyl)4,4'-bipheylene-diphosphonite [IRGAFOS P-EPQ, available from BASF]; bis(2,4-dicumylphenyl)pentaerythritol diphosphite [DOVERPHOS® S9228-T or DOVERPHOS S9228-CT] and P-EPQ® (CAS Reg. No. 119345-01-06) a commercially available diphosphonate; or a mixture thereof. In embodiments of the disclosure, a secondary antioxidant is selected from DOVERPHOS LGP-11, DOVERPHOS LGP-12 and DOVERPHOS LGP-12LV.

In embodiments of the disclosure, a secondary antioxidant is selected from alkylphenol free, polymeric polyphosphites, examples of which are disclosed in U.S. Pat. No. 8,563,637.

In embodiments of the disclosure, a secondary antioxidant is selected from peroxide scavengers, such as, for example, esters of betathiodipropionic acid. Esters betathiodipropionic acid may be selected from the group consisting of lauryl, stearyl, myristyl or tridecyl esters. Other peroxide scavengers for use as a secondary antioxidant in certain embodiments may be selected from the group consisting of mercaptobenzimidazole; or the zinc salt of 2-mercaptobenzimidazole; zinc-dibutyidithiocarbamate; dioctadecyidi sulfide; and pentaerythritottetrakis-(beta-dodecylmercapto)-propionate.

In embodiments of the disclosure, a secondary antioxidant is selected from hydroxylamines and amine oxides, such as, for example, N,N-dibenzylhydroxylamine; N,N-diethylhydroxylamine; N,N-dioctylhydroxylamine; N,N-dilaurylhydroxylamine; N,N-ditetradecylhydroxylamine; N,N-dihexadecylhydroxylamine; N,N-dioctadecylhydroxylamine; N-hexadecyl-N-octadecylhydroxylamine; N-heptadecyl-N-octadecylhydroxylamine; and N,N-dialkylhydroxylamine derived from hydrogenated tallow amine. The analogous amine oxides are also suitable. A commercially available example of hydroxylamine which may be used in embodiments of the disclosure is the N,N-di(alkyl)hydroxylamine sold as IRGASTAB® 042 (by BASF) and which is reported to be prepared by the direct oxidation of N,N - di(hydrogenated) tallow amine.

In embodiments of the disclosure, a secondary antioxidant is selected from nitrones, such as, for example, N-benzyl-alpha-phenyl nitrone; N-ethyl-alpha-methyl nitrone; N-octyl-alpha-heptyl nitrone; N-lauryl-alpha-undecyl nitrone; N-tetradecyl-alpha-tridecyl nitrone; N-hexadecyl-alpha-pentadecyl nitrone; N-octadecyl-alpha-heptadecylnitrone; N-hexadecyl-alpha-heptadecyl nitrone; N-octadecyl-alpha-pentadecyl nitrone; N-heptadecyl-alpha-heptadecyl nitrone; N-octadecyl-alpha-hexadecyl nitrone; and nitrone derived from N, N-dialkylhydroxylamine derived from hydrogenated tallow amine.

In embodiments of the disclosure, the secondary antioxidant may also be used in an amount of from 100 to 5,000 ppm, or from 100 to 3,000 ppm, or from 200 to 3,000 ppm, or from 200 to 2,000 ppm, or from 300 to 1,500 ppm, or from 400 to 1,200 ppm (based on the weight of the thermoplastic polyolefin).

UV Absorbers and Light Stabilizers

In embodiments of the disclosure, a UV absorber or light stabilizer is selected from 2-(2'-hydroxyphenyl)-benzotriazoles, such as, for example, the 5'-methyl-; 3',5'-di-tert-butyl-; 5'-tert-butyl-; 5'(1,1,3,3-tetramethylbutyl)-; 5-chloro-3',5'-di-tert-butyl-; 5-chloro-3'-tert-butyl-5'-methyl-; 3'-sec-butyl-5'-tert-butyl-; 4'-octoxy,3',5'-di-tert-amyl-; and 3',5'-bis-(alpha, alpha - dimethylbenzyl) derivatives.

In embodiments of the disclosure, a UV absorber or light stabilizer is selected from 2-hydroxy-benzophenones, such as, for example, the 4-hydroxy-; 4-methoxy-; 4-octoxy; 4-decyloxy-; 4-dodecyloxy-; 4-benzyloxy-; 4,2',4'-trihydroxy-; and 2'-hydroxy-4,4'-dimethoxy derivative.

In embodiments of the disclosure, a UV absorber or light stabilizer is selected from sterically hindered amines, such as, for example, bis (2,2,6,6-tetramethylpiperidyl)-sebacate; bis-5(1,2,2,6,6-pentamethylpiperidyl)-sebacate; n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylendiamine and 4-tert-octylamino-2,6-dichloro-1,3,5-s-triazine; tris-(2,2,6,6-tetramethylpiperidyl)-nitrilotriacetate, tetrakis-(2,2,6,6-tetramethyl-4-piperidyl)-1,2,3,4butane-tetra-arbonic acid; and 1,1'(1,2-ethanediyl)-bis-(3,3,5,5-tetramethylpiperazinone). These amines are typically called HALS (Hindered Amines Light Stabilizing) and include butane tetracarboxylic acid 2,2,6,6-tetramethyl piperidinol esters. Such amines include hydroxylamines derived from hindered amines, such as di(1-hydroxy-2,2,6,6-tetramethylpiperidin-4-yl) sebacate; 1-hydroxy 2,2,6,6-tetramethyl-4-benzoxypiperidine; 1-hydroxy-2,2,6,6-tetramethyl-4-(3,5-di-tert-butyl-4-hydroxy hydrocinnamoyloxy)-piperdine; and N-(1-hydroxy-2,2,6,6-tetramethyl-piperidin-4-yl)-epsiloncaprolactam. Suitable commercially available HALS which may be used in embodiments of the disclosure include those sold under the trademarks CHIMASSORB® 119; CHIMASSORB 944; CHIMASSORB 2020; TINUVIN® 622 and TINUVIN 770 from BASF, and CYASORB® UV 3346, CYASORB UV 3529, CYASORB UV 4801, and CYASORB UV 4802 from Solvay. In other embodiments of the disclosure, the use of mixtures of more than one HALS are also contemplated

In embodiments of the disclosure, a UV absorber or light stabilizer is selected from esters of substituted and unsubstituted benzoic acids, such as for example, phenyl salicilate; 4-tertbutylphenyl-salicilate; octylphenyl salicylate; dibenzoylresorcinol; bis-(4-tert-butylbenzoyl)-resorcinol; benzoylresorcinol; 2,4-di-tert-butyl-phenyl-3,5-di-tert-butyl-4-hydroxybenzoate; and hexadecyl-3,5-di-tert-butyl-4-hydroxybenzoate.

In embodiments of the disclosure, a UV absorber or light stabilizer is selected from acrylates, such as, for example, alpha-cyano-beta,beta-diphenylacrylic acid-ethyl ester or isooctyl ester; alpha-carbomethoxy-cinnamic acid methyl ester; alpha-cyano-beta-methyl-p-methoxy-cinnamic acid methyl ester or butyl ester; alpha-carbomethoxy-p-methoxycinnamic acid methyl ester; and N-(beta-carbomethoxy-beta-cyano-vinyl)-2-methylindoline.

In embodiments of the disclosure, a UV absorber or light stabilizer is selected from nickel compounds, such as, for example, nickel complexes of 2,2'-thio-bis(4-(1,1,1,3-tetramethylbutyl)-phenol), such as the 1:1 or 1:2 complex, optionally with additional ligands such as n-butylamine, triethanolamine or N-cyclohexyl-diethanolamine; nickel dibutyldithiocarbamate; nickel salts of 4-hydroxy-3,5-di-tert-butylbenzylphosphonic acid monoalkyl esters, such as of the methyl, ethyl, or butyl ester; nickel complexes of ketoximes such as of 2-hydroxy-4-methyl-penyl undecyl ketoxime; and nickel complexes of 1-phenyl-4-lauroyl-5-hydroxy-pyrazole, optionally with additional ligands.

In embodiments of the disclosure, a UV absorber or light stabilizer is selected from oxalic acid diamides, such as, for example, 4,4'-di-octyloxy-oxanilide; 2,2'-di-octyloxy-5',5'-ditert-butyloxanilide; 2,2'-di-dodecyloxy-5',5'di-tert-butyl-oxanilide; 2-ethoxy-2'-ethyl-oxanilide; N,N'-bis(3-dimethylaminopropyl)-oxalamide; 2-ethoxy-5-tert-butyl-2'-ethyloxanilide and its mixture with 2-ethoxy-2'-ethyl-5,4-di-tert-butyloxanilide; and mixtures of ortho-and para-methoxy as well as of o-and p-ethoxy-disubstituted oxanilides.

In embodiments of the disclosure, a UV absorber or light stabilizer is selected from hydroxyphenyl-s-triazines, such as, for example, 2,6-bis-(2,4-dimethylphenyl)-4-(2-hydroxy-4octyloxyphenyl)-s-triazine; 2,6-bis(2,4-dimethylphenyl)-4-(2,4-dihydroxyphenyl)-s-triazine; 5 2,4-bis(2,4-dihydroxyphenyl)-6-(4-chlorophenyl)-s-triazine; 2,4-bis(2-hydroxy4-(2-hydroxyethoxy)phenyl)-6-(4-chlorophenyl)-s-triazine; 2,4-bis(2hydroxy4-(2-hydroxyethoxy)phenyl)-6-phenyl-s-triazine; 2,4-bis(2-hydroxy4-(2-hydroxyethoxy)-phenyl)-6-(2,4-dimethylphenyl)-s-tri azine; 2, 4-bis(2-hydroxy4-(2-hydroxyethoxy)phenyl)-6-(4-bromo-phenyl)-s-triazine; 2,4-bis(2-hydroxy4-(2-acetoryethoxy)phenyl)-6-(4-chlorophenyl)-s-triazine; and 2,4-bis(2,4-dihydroxyphenyl)-6-(2,4-dimethylphenyl)-1-s-triazine.

## Polyamide Stabilizers

In embodiments of the disclosure, a polyamide stabilizer is selected from for example, copper salts in combination with iodides and/or phosphorus compounds and salts of divalent manganese.

## Basic Co-stabilizers

In embodiments of the disclosure, a basic co-stabilizer is selected from, for example, melamine; polyvinylpyrrolidone; dicyandiamide; triallyl cyanurate; urea derivatives; hydrazine derivatives; amines; polyamides; polyurethanes; alkali metal salts and alkaline earth metal salts of higher fatty acids, for example, Ca stearate, calcium stearoyl lactate, calcium lactate, Zn stearate, Mg stearate, Na ricinoleate and K palmitate; antimony pyrocatecholate or zinc pyrocatecholate, including neutralizers such as zinc oxide, hydrotalcites and synthetic hydrotalcites; and Li, Na, Mg, Ca, Al hydroxy carbonates.

In embodiments a hydrotalcite has the formula: $[M^{2+}_{1-x}M^{3+}_{x}(OH)_2]^{x+}[(A^{n-})_{x/n} \cdot mH_2O]^{x-}$ where $M^{2+}$ is divalent Mg, Ni, Zn, Cu, or Mn; $M^{3+}$ is trivalent Al, Fe, or Cr; $A^{n-}$ is an anion such as for examples, $CO_3^{2-}$, or $SO_4^{2-}$, $NO_3^{2-}$, $Cl^{1-}$, or $OH^{1-}$; and x is from 0.1 to 0.5. In an embodiment a hydrotalcite has the formula: $Mg_6Al_2(OH)_{16}CO_3 \cdot nH_2O$. In an embodiment a hydrotalcite is the mineral hydrotalcite ($Mg_6Al_2(OH)_{16}CO_3 \cdot 4H_2O$). Hydrotalcites which may be used in embodiments of the disclosure, include materials commercially available under the general tradenames DHT-4(A, C, or V)™, ZHT-4V™

HYCITE® 713, and AC-207™.

Nucleating Agents

The term "nucleating agent", as used herein, is meant to convey its conventional meaning to those skilled in the art of preparing nucleated polyolefin compositions, namely an additive that changes the crystallization behavior of a polymer as the polymer melt is cooled.

A review of nucleating agents is provided in U.S. Patent Nos. 5,981,636, 6,465,551 and 6,599,971.

Nucleating agents which are commercially available and which may be added to a thermoplastic polyolefin (e.g. a linear polyethylene) are dibenzylidene sorbital esters. Further examples of nucleating agents which may be added to thermoplastic polyolefins (e.g. a linear polyethylene) include the cyclic organic structures disclosed in U.S. Patent No. 5,981,636 (and salts thereof, such as disodium bicyclo [2.2.1] heptene dicarboxylate); the saturated versions of the structures disclosed in U.S. Patent No. 5,981,636 (as disclosed in U.S. Patent No. 6,465,551; Zhao et al., to Milliken); the salts of certain cyclic dicarboxylic acids having a hexahydrophthalic acid structure (or "HHPA" structure) as disclosed in U.S. Patent No. 6,599,971 (Dotson et al., to Milliken); and phosphate esters, such as those disclosed in U.S. Patent No. 5,342,868 and those sold under the trade names NA-11 and NA-21 by Asahi Denka Kogyo, cyclic dicarboxylates and the salts thereof, such as the divalent metal or metalloid salts, (particularly, calcium salts) of the HHPA structures disclosed in U.S. Patent No. 6,599,971. For clarity, the HHPA structure comprises a ring structure with six carbon atoms in the ring and two carboxylic acid groups which are substituents on adjacent atoms of the ring structure. The other four carbon atoms in the ring may be substituted, as disclosed in U.S. Patent No. 6,599,971. An example is 1,2-cyclohexanedicarboxylicacid, calcium salt (CAS registry number 491589-22-1). Still further examples of nucleating agents which may be added to a thermoplastic polyolefin (e.g., a linear polyethylene) include those disclosed in WO2015042561, WO2015042563, WO2015042562 and WO2011050042.

In an embodiment of the disclosure, the amount of nucleating agent used is comparatively small--from 100 to 3,000 parts per million by weight (based on the weight of the thermoplastic polyolefin) so it will be appreciated by those skilled in the art that some care should be taken to ensure that the nucleating agent is well dispersed. In an embodiment of the disclosure, the nucleating agent is added in finely divided form (less than 50 microns, especially less than 10 microns) to the thermoplastic polyolefin (e.g., a linear polyethylene) to facilitate mixing. This type of "physical blend" (i.e. a mixture of the nucleating agent and the resin in solid form) is in some embodiments preferable to the use of a "masterbatch" of the nucleator (where the term "masterbatch" refers to the practice of first melt mixing the additive--the nucleator, in this case--with a small amount of the thermoplastic polyolefin --then melt mixing the "masterbatch" with the remaining bulk of the thermoplastic polyolefin).

In an embodiment of the disclosure, an additive such as nucleating agent may be added to the thermoplastic polyolefin by way of a "masterbatch", where the term "masterbatch" refers to the practice of first melt mixing the additive (e.g. a nucleator) with a small amount of the thermoplastic polyolefin, followed by melt mixing the "masterbatch" with the remaining bulk of the thermoplastic polyolefin.

In embodiments, the nucleating agent, or mixture of nucleating agents is added in an amount of from 50 to 5,000 ppm, or from 100 to 4,000 ppm, or from 200 to 4,000 ppm, or from 100 to 3,000 ppm, or from 200 to 3,000 ppm, or from 100 to 2,000 ppm, or from 200 to 2,000 ppm, or from or from 500 to 5,000 ppm, or from 500 to 4,000 ppm, or from 500 to 3,000 ppm, or from 500 to 2,000 ppm or from 500 to 1,500 ppm, based on the weight of the thermoplastic polyolefin.

Slip Agents

In embodiments of the disclosure, a slip agent is selected from oleamide; erucamide; stearamide; and behenamide.

Fillers, Antiblocking Agents, and Reinforcing Agents

In embodiments of the disclosure, a filler, an antiblocking agent, or a reinforcing agents is selected from calcium carbonate; diatomaceous earth; natural and synthetic silica; silicates; glass fibers; asbestos; talc; kaolin; mica; barium sulfate; metal oxides and hydroxides; carbon black; and graphite.

If present, then in some embodiments of the disclosure, fillers may be incorporated into the thermoplastic polyolefin (e.g. the linear polyethylene) in amounts up to about 50 weight percent, or up to about 30 weight percent, or up to about 20 weight percent, or up to about 10 weight percent (based on the weight of the thermoplastic polyolefin).

Miscellaneous Additives

In embodiments of the disclosure, a miscellaneous additive is selected from plasticizers; epoxidized vegetable

oils, such as epoxidized soybean oils; lubricants; emulsifiers; pigments; optical brighteners; flameproofing agents; antistatic agents; anti-fog agents; blowing agents; and thiosynergists, such as dilaurylthiodipropionate or distearylthiodipropionate.

Melt Extrusion

Extrudable thermoplastic compositions as described herein can be prepared by any one or a variety of ways. In an embodiment, the polymer processing aid components can be mixed with a thermoplastic polyolefin during a melt extrusion process. In an alternative embodiment, one or more of the polymer processing aid components can be formulated with a polyolefin, in a so called "masterbatch". Such a masterbatch may be used to deliver a useful, diluted amount of one or more of the polymer processing aid components. The masterbatch may be added to the bulk thermoplastic polyolefin for extrusion in a melt extrusion process into an extruded article.

The thermoplastic polyolefin to be extruded and the polymer processing aid components can be combined using any of the blending means well known to persons skilled in the art, such as for example, using a compounding mill, a Banbury mixer, or a mixing extruder in which the polymer processing aid components are uniformly distributed within the thermoplastic polyolefin. Such mixing may be carried out at a temperature above the melting point, or the softening point of the polyolefin, or such mixing may simply be a dry blend mixing of solid thermoplastic polyolefin with polymer process aid components.

An extrudable thermoplastic composition as described herein may be prepared by melt blending a thermoplastic polyolefin (e.g. a linear polyethylene) with polymer processing aids prior to final extrusion in a melt extrusion process (such as for example a blown film extrusion process).

There are several methods which could be used to produce the extrudable thermoplastic compositions described herein. In an embodiment, all the components are dry blended in the desired weight ratio in a suitable device such as a tumble blender. The resulting dry blend is then melted in suitable equipment such as an extruder. In an alternative embodiment, a masterbatch could be prepared with some of the thermoplastic polyolefin and the other ingredients, including polymer processing aids or other additives. In such an embodiment, the thermoplastic polyolefin masterbatch is then fed to an extruder and melt blended with other components as desired including for example bulk polyolefin, polymer processing aids or other additives. In yet another embodiment, each of the components used to make up the extrudable thermoplastic composition may be metered directly into an extruder used for the melt extrusion process.

Melt extrusion processes are well known to persons skilled in the art, non-limiting examples of which include, cast film extrusion, blown film extrusion, extrusion blow molding, injection molding, pipe extrusion, wire extrusion, cable extrusion, and fiber extrusion. The extruder employed in embodiments of the present disclosure may be a twin or single screw extruder. If it a twin screw extruder is employed it may be operated in a corotating mode (i.e. both screws turning in the same direction) or in a counter rotating mode (i.e. the screws rotate in opposite directions).

The specific conditions for operation of any extruder in a melt extrusion process will differ from that of any other extruder. The variations between extruder machines may usually be resolved by routine optimization methods well known to persons skilled in the art. In an embodiment of the disclosure, a laboratory scale twin screw extruder will operate within the following envelope of conditions: the barrel will be heated to a temperature from about 180 to 210°C, or from about 190 to 200°C; the screw speed will operate at from about 50 to about 150 rpm, or from about 100 to about 130 rpm. The specific conditions for the operation of any specific extruder can readily be determined by one skilled in the art by non-inventive testing in view of the foregoing envelope of conditions. The extruder will typically extrude a thermoplastic composition as strands which are then cooled and cut into pellets for subsequent use, such as for use in a film extrusion. The extruder used for the final extrusion may also be a single or twin screw extruder. In blown film extrusion, the die may be a slot die or it may be an annular ring die extruding a film of the polyolefin about a stable bubble of air. In blown film extrusion, the film is collapsed after passing over or about the bubble.

The specific details of extruders and their operation are known to persons skilled in the art. A typical extruder contains one (or two) flighted screws which rotate within a cylinder or "barrel". A thermoplastic polyolefin is sheared between the barrel and the screw by the stresses caused by the rotation of the screw. In addition, the barrel of the extruder may be heated. The shear and/or heat cause the thermoplastic polyolefin to melt and the action of the flighted screw transports it along the length of the extruder. The molten thermoplastic polyolefin extrudate is then forced through a die to form the desired plastic part.

In embodiment of the disclosure, a melt extrusion process is a blown film melt extrusion process.

In a blown film melt extrusion process an extruder heats, melts, mixes and conveys a thermoplastic polyolefin composition. Once molten, the thermoplastic composition is forced through an annular die to produce a thermoplastic tube. In the case of co-extrusion, multiple extruders are employed to produce a multilayer thermoplastic tube. The temperature of the extrusion process is primarily determined by the thermoplastic polyolefin composition being processed, for example the melting temperature or glass transition temperature of the thermoplastic polyolefin composition and the desired viscosity of the melt. In the case of thermoplastic polyolefins, typical extrusion temperatures are from 330°F to

550°F (166°C to 288°C). Upon exit from the annular die, the thermoplastic tube is inflated with air, cooled, solidified and pulled through a pair of nip rollers. Due to air inflation, the tube increases in diameter forming a bubble of desired size. Due to the pulling action of the nip rollers the bubble is stretched in the machine direction. Thus, the bubble is stretched in two directions: the transverse direction (TD) where the inflating air increases the diameter of the bubble; and the machine direction (MD) where the nip rollers stretch the bubble. In the blown film process, air is also blown on the external bubble circumference to cool the thermoplastic polyolefin as it exits the annular die. The final width of the film is determined by controlling the inflating air or the internal bubble pressure; in other words, increasing or decreasing bubble diameter. Film thickness is controlled primarily by increasing or decreasing the speed of the nip rollers to control the draw-down rate. After exiting the nip rollers, the bubble or tube is collapsed and may be slit in the machine direction thus creating sheeting. Each sheet may be wound into a roll of film. Each roll may be further slit to create film of the desired width. Each roll of film may be further processed into a variety of consumer products.

The cast film process is similar in that a single or multiple extruder(s) may be used; however the various thermoplastic materials are metered into a flat die and extruded into a monolayer or multilayer sheet, rather than a tube. In the cast film process the extruded sheet is solidified on a chill roll.

In embodiment of the disclosure, a polymer processing aid is used during the melt extrusion of a thermoplastic polyolefin into a thermoplastic polyolefin extrudate.

In embodiments of the disclosure, the use of a polymer processing aid during the melt extrusion of a thermoplastic polyolefin into a thermoplastic polyolefin extrudate, decreases melt defects during the extrusion of the thermoplastic polyolefin.

In an embodiment of the disclosure, the use of a polymer processing aid during the melt extrusion of a thermoplastic polyolefin into a thermoplastic polyolefin extrudate, increases the shear rate at which the melt extrusion process may be operated without melt defects in the thermoplastic polyolefin extrudate, compared to the shear rate at which melt defects occur in the thermoplastic polyolefin extrude in the absence of the polymer processing aid.

In embodiments of the disclosure, the use of a polymer processing aid during the melt extrusion of a thermoplastic polyolefin into a thermoplastic polyolefin extrudate, increases the shear rate at which the melt extrusion process may be operated without melt defects in the thermoplastic polyolefin extrudate, by at least 10 percent, or at least 25 percent, or at least 50 percent, or at least 75 percent, or at least 100 percent, or at least 200 percent, or at least 300 percent, or at least 400 percent, or at least 500 percent, compared to the shear rate at which melt defects occur in the thermoplastic polyolefin extrudate in the absence of the polymer processing aid.

Disclosed herein is a method to reduce melt defects during the extrusion of a linear polyethylene, the method comprising: combining the linear polyethylene with at least one poly(ether-block-amide) and at least one polycaprolactone polymer to give an extrudable thermoplastic composition, and extruding the thermoplastic composition.

Disclosed herein is a method to reduce melt defects during the extrusion of a thermoplastic composition; the method comprising: combining a linear polyethylene with at least one poly(ether-block-amide) copolymer, at least one polycaprolactone polymer, and at least one polyalkylene glycol to give the thermoplastic composition; and melt extruding the thermoplastic composition.

Disclosed herein is a method to reduce melt defects during the extrusion of a thermoplastic composition; the method comprising: combining a linear polyethylene with at least one poly(ether-block-amide) copolymer, at least one polycaprolactone polymer, at least one polyalkylene glycol and a high pressure low density polyethylene (LDPE) to give the thermoplastic composition; and melt extruding the thermoplastic composition.

The following examples are presented for the purpose of illustrating selected embodiments of this disclosure; it being understood, that the examples presented do not limit the claims presented.

## EXAMPLES

### Polymer Characterization and Test Methods

Prior to testing, each polymer specimen was conditioned for at least 24 hours at 23 ±2°C and 50 ±10% relative humidity and subsequent testing was conducted at 23 ±2°C and 50 ±10% relative humidity. Herein, the term "ASTM conditions" refers to a laboratory that is maintained at 23 ±2°C and 50 ±10% relative humidity; and specimens to be tested were conditioned for at least 24 hours in this laboratory prior to testing. ASTM refers to the American Society for Testing and Materials.

### Density

Polymer (e.g. the linear polyethylene or the LDPE) densities were determined using ASTM D792-13 (November 1, 2013).

Melt Index

Polyethylene melt index was determined using ASTM D1238 (August 1, 2013). Melt indexes, $I_2$, $I_6$, $I_{10}$ and $I_{21}$ were measured at 190° C, using weights of 2.16 kg, 6.48 kg, 10 kg and a 21.6 kg respectively.

Gel Permeation Chromatography (GPC)

Polyethylene samples (polymer) solutions (1 to 3 mg/mL) were prepared by heating the polymer in 1,2,4-trichlorobenzene (TCB) and rotating on a wheel for 4 hours at 150°C in an oven. An antioxidant (2,6-di-tert-butyl-4-methylphenol (BHT)) was added to the mixture in order to stabilize the polymer against oxidative degradation. The BHT concentration was 250 ppm. Polymer solutions were chromatographed at 140°C on a PL 220 high-temperature chromatography unit equipped with four SHODEX® columns (HT803, HT804, HT805 and HT806) using TCB as the mobile phase with a flow rate of 1.0 mL/minute, with a differential refractive index (DRI) as the concentration detector. BHT was added to the mobile phase at a concentration of 250 ppm to protect GPC columns from oxidative degradation. The sample injection volume was 200 μL. The GPC columns were calibrated with narrow distribution polystyrene standards. The polystyrene molecular weights were converted to polyethylene molecular weights using the Mark-Houwink equation, as described in the ASTM standard test method D6474-12 (December 2012). The GPC raw data were processed with the CIRRUS® GPC software, to produce molar mass averages ($M_n$, $M_w$, $M_z$) and molar mass distribution (e.g. Polydispersity, $M_w/M_n$). In the polyethylene art, a commonly used term that is equivalent to GPC is SEC, i.e. Size Exclusion Chromatography.

Melt Extrusion

It has been observed that the performance of a polymer processing aid (a "PPA") in reducing melt defects in polyolefin extrudates is influenced by the shear rate at the extruder die. A generally accepted equation for the estimation of shear rate at the die is given by Eq 1:

$$(1)\ \gamma = 2Q(S+2) / \rho\pi d^2 \mathrm{D}$$

where *y* = shear rate (reciprocal seconds, $s^{-1}$); $\rho$ = density of the polymer melt; S = 1/power law index; *d* = die gap width; *D* = die diameter; and *Q* = mass flow rate of polymer.

A generally accepted estimate of density for molten polyethylene is 0.76 grams per cubic centimeter ($g/cm^3$) and this value was used for all calculations. A generally accepted value for power law index is 0.5 and this value was used in all calculations.

Melt Fracture Clearing

Extrudable thermoplastic polyolefin compositions for blown film extrusion were prepared by melt compounding a linear polyethylene with polymer processing aids and other additives on a Leistritz twin-screw pelletizer under mild conditions with nitrogen purge; see Table 1 for conditions.

TABLE 1. Melt Compounding Conditions

| | |
|---|---|
| Amperage (amps) | 21.5 |
| Nitrogen Purge | On |
| Output (pounds/hour) | 18.5 |
| Pressure (psi) | 1410 - 1440 |
| Melt Temp. (°C) | 200 |

The polyamide/polyether block copolymer used in an admixture with a linear polyethylene was PEBAX MV 1074 commercially available from Arkema.

The polylcaprolactone polymer used in an admixture with a linear polyethylene was CAPA 2403D commercially available from Ingevity. CAPA 2403D is a polycaprolactone polyol diol initiated with 1,4-butanediol and has a molecular weight (Mn) of 4000 g/mol.

The linear polyethylene used in the experiments was a linear low density polyethylene, LLDPE having a density of 0.920 $g/cm^3$ and a melt index, $I_2$ of about 1.0 g/10 minutes. It is sold under the tradename FP120 by NOVA Chemicals and is

available in various formulations as FP120-A and FP120-C. FP120, FP120-A, and FP120-C are copolymers of ethylene and 1-octene and are made in a solution phase polymerization process using a Ziegler-Natta catalyst. The linear polyethylene, FP120 contained a conventional primary antioxidant (a hindered phenol = 500 ppm IRGANOX 1076); a conventional secondary antioxidant (a phosphite = 500 ppm IRGAFOS 168); and hydrotalcite (800 ppm) where ppm, or parts per million is based on the weight of the linear polyethylene. The linear polyethylene, FP120-C, contained a conventional primary antioxidant (a hindered phenol = 500 ppm IRGANOX 1076); a conventional secondary antioxidant (a phosphite = 500 ppm IRGAFOS 168); hydrotalcite (800 ppm); and 650 ppm of VITON® Z110 (a PPA comprising an elastomeric fluoropolymer and a polyethylene glycol where ppm, or parts per million is based on the weight of the linear polyethylene).

A monolayer blown film line equipped with a 3-inch diameter die (manufactured by Macro Engineering & Technology Inc. based in Ontario, CA) was used to determine the effectiveness of the addition of a polyamide/polyether block copolymer and a polycaprolactone polymer as a polymer processing aid (PPA) in clearing melt defects from an extrudate.

The 3-inch Macro blown film line had a standard output of greater than 60 pounds per hour and is equipped with a 15 horsepower motor. The feed-screw had a 1.5 inch diameter and a length/diameter (L/D) ratio of 24/1. The feed-screw is a barrier design, and is fitted with a mixing element on the end of the screw. The film bubble is air cooled using chilled air, and the line was operated at a blow up ratio (BUR) of between 2/1 and 4/1. The blown film line was fitted with a 3 inch diameter annular die. Two die pins were utilized resulting in die gaps of 35 or 85 mils for the experiments.

In Example 1A, the linear polyethylene, FP120 was pre-formulated (e.g. melt compounded in an extruder/pelletizer) with 1,500 ppm (by weight based on the weight of the linear polyethylene) of a polyamide/polyether block copolymer (PEBAX MV 1074) and was then melt extruded on the blown film line.

In Example 1B, the commercially available FP120-C which contained an elastomeric fluoropolymer as well as a polyethylene glycol material (Viton Z110) as a PPA was melt extruded on the blown film line.

In Example 1C, the linear polyethylene, FP120 was pre-formulated (e.g. melt compounded in an extruder/pelletizer) with 750 ppm (by weight based on the weight of the linear polyethylene) of a polyamide/polyether block copolymer (PEBAX MV 1074) and 750 ppm (by weight based on the weight on the linear polyethylene) of a polycaprolactone polymer (CAPA 2403D) and was then melt extruded on the blown film line.

During the melt fracture clearing experiments on the blown film line, the extruder was operated with a mass flow rate "aiming point" of about 65 pounds per hour (corresponding to a shear rate of about 460 $s^{-1}$). The term "melt fracture" is well known to those skilled in the art and generally refers to a film having obvious signs of surface imperfections which manifest as die lines, haze bands or small bands of soft melt fracture (orange peel) or hard melt fracture (shark-skin). The phrase "clear of melt fracture" means a film has a clear, defect free surface.

Details of the components used in the extrudable thermoplastic composition and the melt extrusion process are provided in Table 2.

TABLE 2. Melt Fracture Clearing in Extrudable Thermoplastic Polyolefin Compositions

| Example No. | 1A | 1B | 1C |
|---|---|---|---|
| Linear Polyethylene | FP120 | FP120-C | FP120 |
| Selected Additives | 800 ppm hydrotalcite | 800 ppm hydrotalcite | 800 ppm hydrotalcite |
| Polymer Processing Aids | 1500 ppm PEBAX MV1074 | 650 ppm VITON Z110 | 750 ppm PEBAX MV1074/750 ppm CAPA 2403D |
| Output Rate at Onset of Melt Fracture (lbs/hour) | 65 | 65 | 65 |
| Shear Rate at Onset of Melt Fracture ($s^{-1}$) | 460 | 460 | 460 |
| Frost Line Height (inches) | 16 | 16 | 16 |
| Die Mill Gap (mils) | 35 | 35 | 35 |
| Blow Up Ratio | 2.5:1 | 2.5:1 | 2.5:1 |
| Thickness (mil) | 2 | 2 | 2 |
| Melt Temp. (°F) | 420 | 420 | 420 |

Before the addition of a target thermoplastic composition, the blown film line was purged using a LLDPE or a

LDPE containing 30 - 40% of diatomaceous earth which was free of any polymer processing aids to clean the die by abrasion. Following purging, a PPA free LLDPE with a density of about 0.92 $g/cm^3$ and a melt index of 0.8 g/10 min was introduced to produce an extrudate having 100% hard melt fracture across the entire width of the film (e.g. to produce film having gross surface defects with similar appearance to shark skin). Next, the target thermoplastic composition was introduced and this was recoded as time zero. The target thermoplastic composition was extruded under constant conditions and swatches of the extrudate film were collected every ten minutes to measure melt fracture defects as a percentage of the width of the swatch. The melt extrusion process was continued for 60 minutes for each experiment, and the melt fracture percentage was recorded in 10 minute intervals. The extrudate was considered to be clear of melt fracture, when the melt fracture percentage reached zero. As a general non-limiting guideline, a polymer processing aid (a PPA) may be regarded as providing good performance if melt fracture clears at or before about 60 minutes of extruder operation. The results of the melt fracture clearing experiments are shown in Figure 1.

A person skilled in the art will observe from the data provided in Figure 1, that a thermoplastic composition comprising a linear polyethylene and only a polyamide/polyether block copolymer as a PPA (e.g. PEBAX MV 1074, in Example 1A) was able to clear melt fracture completely within about 30 minutes. Although the initiation of melt fracture clearance occurred sooner, at about 10 minutes, when an elastomeric fluoropolymer and a polyethylene glycol (e.g. VITON Z110) were used as a polymer processing aid (Example 1B), it took about 40 minutes to completely clear melt fracture. As further shown in Figure 1, use of a both a polyamide/polyether block copolymer and a polycaprolactone polymer (Example 1C), provides even better melt fracture clearing performance, in that melt fracture clearance both begins at about 10 min and is complete by about 30 minutes.

The data shows that a poly(ether-block-amide) copolymer (a PEBA copolymer) together with a polycaprolactone polymer can be used as an effective polymer processing aid, even in the absence of fluoropolymers.

INDUSTRIAL APPLICABILITY

Polymer processing aids (PPAs) are provided which reduce melt fracture defects in extruded polyolefins in the absence of fluoropolymers.

## Claims

1. A process for preparing a thermoplastic composition extrudate, the process comprising extruding a thermoplastic composition in a melt extrusion process; the thermoplastic composition comprising: i) a linear polyethylene; ii) from 200 to 4000 parts per million (based on the weight the linear polyethylene) of a poly(ether-block-amide) copolymer; and iii) from 200 to 4000 parts per million (based on the weight of the linear polyethylene) of a polycaprolactone polymer;

   wherein the linear polyethylene is selected from the group consisting of LLDPE, MDPE, VLDPE, HDPE, and mixtures thereof;
   wherein the poly(ether-block-amide) copolymer comprises polyamide blocks and polyether blocks;
   wherein the thermoplastic composition is substantially free of fluoropolymers; and
   wherein the melt extrusion process is carried out in the absence of fluoropolymers.

2. The process of claim 1, wherein the thermoplastic composition further comprises: iv) 200 to 4000 parts per million (based on the weight of the linear polyethylene) of a polyethylene glycol.

3. The process of claim 1 or 2, wherein the linear polyethylene comprises zinc oxide; or wherein the linear polyethylene comprises hydrotalcite.

4. The process of any one of claims 1 to 3, wherein the linear polyethylene is a LLDPE.

5. The process of claim 4, wherein the LLDPE has a melt index, $I_2$ of from 0.1 to 5.0 grams per 10 minutes; or wherein the LLDPE has a density of from 0.910 to 0.936 $g/cm^3$; or wherein the LLDPE is an ethylene copolymer comprising polymerized ethylene and one or more alpha olefin selected from the group consisting of 1-butene, 1-hexene, and 1-octene.

6. The process of any one of claims 1 to 5, wherein the poly(ether-block-amide) copolymer comprises polyamide blocks which are polyamide-12 (PA-12) blocks and polyether blocks which are polyethylene glycol (PEG) blocks.

7. The process of claim 6, wherein the polyamide-12 (PA-12) blocks represent about 40 to 50 weight percent of the poly(ether-block-amide) copolymer, and the polyethylene glycol (PEG) blocks represent about 60 to 50 weight percent of the poly(ether-block-amide) copolymer.

8. The process of any one of claims 1 to 5, wherein the poly(ether-block-amide) copolymer comprises from 10 to 20 polyamide blocks and from 10 to 20 polyether blocks.

9. The process of any one of claims 1 to 5, wherein the poly(ether-block-amide) copolymer comprises from 10 to 20 polyamide blocks which are polyamide-12 (PA-12) blocks and from 10 to 20 polyether blocks which are polyethylene glycol (PEG) blocks.

10. The process of any one of claims 1 to 6, wherein the poly(ether-block-amide) copolymer has a number average molecular weight, Mn of from about 50,000 to about 75,000 g/mol.

11. The process of any one of claims 1 to 10, wherein the polycaprolactone polymer is a polycaprolactone diol polymer, with a number average molecular Mn, of from about 500 g/mol to about 6,000 g/mol and which is derived from epsilon-caprolactone using a 1,4-butanediol as an initiator.

12. The process of any one of claims 1 to 11, wherein the thermoplastic composition comprises from 200 to 2,000 parts per million (based on the weight the linear polyethylene) of the poly(ether-block-amide) copolymer.

13. The process of any one of claims 1 to 12, wherein the thermoplastic composition comprises from 200 to 2,000 parts per million (based on the weight of the linear polyethylene) of the polycaprolactone polymer.

14. The process of any one of claims 1 to 13, wherein the melt extrusion process is conducted at a shear rate which would produce a thermoplastic composition extrudate having melt fracture defects if carried out using a thermoplastic composition consisting essentially of the linear polyethylene.

15. A process for preparing a thermoplastic composition extrudate, the process comprising:

a) preparing a thermoplastic composition by combining a linear polyethylene with 200 to 4,000 parts per million of at least one poly(ether-block-amide) copolymer (based on the weight of the linear polyethylene) and from 200 to 4,000 parts per million (based on the weight of the linear polyethylene) of at least one polycaprolactone polymer; and
b) extruding the thermoplastic composition in a melt extrusion process;
wherein the linear polyethylene is selected from the group consisting of LLDPE, MDPE, VLDPE, HDPE, and mixtures thereof;
wherein the at least one poly(ether-block-amide) copolymer comprises polyamide blocks and polyether blocks;
wherein the thermoplastic composition is substantially free of fluoropolymers; and
wherein the melt extrusion process is carried out in the absence of fluoropolymers.

16. A process for preparing a thermoplastic composition extrudate, the process comprising:

a) preparing a thermoplastic composition by combining a linear polyethylene with 200 to 4,000 parts per million of at least one poly(ether-block-amide) copolymer (based on the weight of the linear polyethylene), from 200 to 4000 parts per million (based on the weight of the linear polyethylene) of at least one polycaprolactone polymer, and 200 to 4,000 parts per million (based on the weight of the linear polyethylene) of at least one polyethylene glycol; and
b) extruding the thermoplastic composition in a melt extrusion process;
wherein the linear polyethylene is selected from the group consisting of LLDPE, MDPE, VLDPE, HDPE, and mixtures thereof;
wherein the at least one poly(ether-block-amide) copolymer comprises polyamide blocks and polyether blocks;
wherein the thermoplastic composition is substantially free of fluoropolymers; and
wherein the melt extrusion process is carried out in the absence of fluoropolymers.

17. The process of claim 15 or claim 16, wherein the linear polyethylene comprises zinc oxide; or wherein the linear polyethylene comprises hydrotalcite.

## Patentansprüche

1. Verfahren zur Herstellung eines Extrudats einer thermoplastischen Zusammensetzung, wobei das Verfahren das Extrudieren einer thermoplastischen Zusammensetzung in einem Schmelzextrusions-Verfahren umfasst; wobei die thermoplastische Zusammensetzung Folgendes umfasst: i) ein unverzweigtes Polyethylen; ii) 200 bis 4.000 ppm (bezogen auf das Gewicht des unverzweigten Polyethylens) eines Poly(ether-block-amid)-Copolymers; und iii) 200 bis 4.000 ppm (bezogen auf das Gewicht des unverzweigten Polyethylens) eines Polycaprolacton-Polymers;

   wobei das unverzweigte Polyethylen aus der aus LLDPE, MDPE, VLDPE, HDPE und Gemischen davon bestehenden Gruppe ausgewählt ist;
   wobei das Poly(ether-block-amid)-Copolymer Polyamid-Blöcke und Polyether-Blöcke umfasst;
   wobei die thermoplastische Zusammensetzung im Wesentlichen frei von Fluorpolymeren ist; und
   wobei das Schmelzextrusions-Verfahren in Abwesenheit von Fluorpolymeren durchgeführt wird.

2. Verfahren nach Anspruch 1, wobei die thermoplastische Zusammensetzung weiters Folgendes umfasst: iv) 200 bis 4.000 ppm (bezogen auf das Gewicht des unverzweigten Polyethylens) eines Polyethylenglykols.

3. Verfahren nach Anspruch 1 oder 2, wobei das unverzweigte Polyethylen Zinkoxid umfasst oder wobei das unverzweigte Polyethylen Hydrotalcit umfasst.

4. Verfahren nach einem der Ansprüche 1 bis 3, wobei das unverzweigte Polyethylen ein LLDPE ist.

5. Verfahren nach Anspruch 4, wobei das LLDPE einen Schmelzindex $I_2$ von 0,1 bis 5,0 g/10 min aufweist; oder wobei das LLDPE eine Dichte von 0,910 bis 0,936 g/cm$^3$ aufweist; oder wobei das LLDPE ein Ethylen-Copolymer ist, das polymerisiertes Ethylen und ein oder mehrere $\alpha$-Olefine umfasst, die aus der aus 1-Buten, 1-Hexen und 1-Octen bestehenden Gruppe ausgewählt sind.

6. Verfahren nach einem der Ansprüche 1 bis 5, wobei das Poly(ether-block-amid)-Copolymer Polyamid-Blöcke, die Polyamid-12- (PA-12-) Blöcke sind, und Polyether-Blöcke, die Polyethylenglykol- (PEG-) Blöcke sind, umfasst.

7. Verfahren nach Anspruch 6, wobei die Polyamid-12- (PA-12-) Blöcke etwa 40 bis 50 Gew.-% des Poly(ether-block-amid)-Copolymers ausmachen, und die Polyethylenglykol-(PEG-) Blöcke etwa 60 bis 50 Gew.-% des Poly(ether-block-amid)-Copolymers ausmachen.

8. Verfahren nach einem der Ansprüche 1 bis 5, wobei das Poly(ether-block-amid)-Copolymer 10 bis 20 Polyamid-Blöcke und 10 bis 20 Polyether-Blöcke umfasst.

9. Verfahren nach einem der Ansprüche 1 bis 5, wobei das Poly(ether-block-amid)-Copolymer 10 bis 20 Polyamid-Blöcke, die Polyamid-12- (PA-12-) Blöcke sind, und 10 bis 20 Polyether-Blöcke, die Polyethylenglykol- (PEG-) Blöcke sind, umfasst.

10. Verfahren nach einem der Ansprüche 1 bis 6, wobei das Poly(ether-block-amid)-Copolymer ein zahlenmittleres Molekulargewicht Mn von etwa 50.000 bis etwa 75.000 g/mol aufweist.

11. Verfahren nach einem der Ansprüche 1 bis 10, wobei das Polycaprolacton-Polymer ein Polycaprolactondiol-Polymer mit einem zahlenmittleren Molekulargewicht Mn von etwa 500 g/mol bis etwa 6.000 g/mol ist, das von $\varepsilon$-Caprolacton unter Verwendung eines 1,4-Butandiols als Initiator abgeleitet ist.

12. Verfahren nach einem der Ansprüche 1 bis 11, wobei die thermoplastische Zusammensetzung 200 bis 2.000 ppm (bezogen auf das Gewicht des unverzweigten Polyethylens) des Poly(ether-block-amid)-Copolymers umfasst.

13. Verfahren nach einem der Ansprüche 1 bis 12, wobei die thermoplastische Zusammensetzung 200 bis 2.000 ppm (bezogen auf das Gewicht des unverzweigten Polyethylens) des Polycaprolacton-Polymers umfasst.

14. Verfahren nach einem der Ansprüche 1 bis 13, wobei das Schmelzextrusions-Verfahren bei einer Scherrate durchgeführt wird, die ein Extrudat einer thermoplastischen Zusammensetzung ergeben würde, das Schmelzfraktur-Defekte aufweisen würde, wenn es unter Verwendung einer thermoplastischen Zusammensetzung durchgeführt werden würde, die im Wesentlichen aus dem unverzweigten Polyethylen besteht.

**15.** Verfahren zur Herstellung eines Extrudats einer thermoplastischen Zusammensetzung, wobei das Verfahren Folgendes umfasst:

a) das Herstellen einer thermoplastischen Zusammensetzung durch Kombinieren eines unverzweigten Polyethylens mit 200 bis 4.000 ppm zumindest eines Poly(ether-block-amid)-Copolymers (bezogen auf das Gewicht des unverzweigten Polyethylens) und mit 200 bis 4.000 ppm (bezogen auf das Gewicht des unverzweigten Polyethylens) zumindest eines Polycaprolacton-Polymers und
b) das Extrudieren der thermoplastischen Zusammensetzung in einem Schmelzextrusions-Verfahren;
wobei das unverzweigte Polyethylen aus der aus LLDPE, MDPE, VLDPE, HDPE und Gemischen davon bestehenden Gruppe ausgewählt ist;
wobei das zumindest eine Poly(ether-block-amid)-Copolymer Polyamid-Blöcke und Polyether-Blöcke umfasst;
wobei die thermoplastische Zusammensetzung im Wesentlichen frei von Fluorpolymeren ist; und
wobei das Schmelzextrusions-Verfahren in Abwesenheit von Fluorpolymeren durchgeführt wird.

**16.** Verfahren zur Herstellung eines Extrudats einer thermoplastischen Zusammensetzung, wobei das Verfahren Folgendes umfasst:

a) das Herstellen einer thermoplastischen Zusammensetzung durch Kombinieren eines unverzweigten Polyethylens mit 200 bis 4.000 ppm zumindest eines Poly(ether-block-amid)-Copolymers (bezogen auf das Gewicht des unverzweigten Polyethylens) und mit 200 bis 4.000 ppm (bezogen auf das Gewicht des unverzweigten Polyethylens) zumindest eines Polycaprolacton-Polymers und mit 200 bis 4.000 ppm (bezogen auf das Gewicht des unverzweigten Polyethylens) zumindest eines Polyethylenglykols und
b) das Extrudieren der thermoplastischen Zusammensetzung in einem Schmelzextrusions-Verfahren;
wobei das unverzweigte Polyethylen aus der aus LLDPE, MDPE, VLDPE, HDPE und Gemischen daraus bestehenden Gruppe ausgewählt ist;
wobei das zumindest eine Poly(ether-block-amid)-Copolymer Polyamid-Blöcke und Polyether-Blöcke umfasst;
wobei die thermoplastische Zusammensetzung im Wesentlichen frei von Fluorpolymeren ist; und
wobei das Schmelzextrusions-Verfahren in Abwesenheit von Fluorpolymeren durchgeführt wird.

**17.** Verfahren nach Anspruch 15 oder Anspruch 16, wobei das unverzweigte Polyethylen Zinkoxid umfasst; oder wobei das unverzweigte Polyethylen Hydrotalcit umfasst.

**Revendications**

**1.** Procédé de préparation d’un extrudat de composition thermoplastique, le procédé comprenant l’extrusion d’une composition thermoplastique dans un procédé d’extrusion à l’état fondu ;

la composition thermoplastique, comprenant :

i) un polyéthylène linéaire ;
ii) de 200 à 4 000 parties par million (sur la base du poids du polyéthylène linéaire) d’un copolymère de poly(éther-bloc-amide) ; et
iii) de 200 à 4 000 parties par million (sur la base du poids du polyéthylène linéaire) d’un polymère de polycaprolactone ;

dans lequel le polyéthylène linéaire est choisi dans le groupe constitué du LLDPE, du MDPE, du VLDPE, du HDPE et de mélanges de ceux-ci ;
dans lequel le copolymère de poly(éther-bloc-amide) comprend des blocs de polyamide et des blocs de polyéther ;
dans lequel la composition thermoplastique est substantiellement exempte de polymères fluorés ; et
dans lequel le procédé d’extrusion à l’état fondu est effectué en l’absence de polymères fluorés.

**2.** Procédé selon la revendication 1, dans lequel la composition thermoplastique comprend en outre :
iv) de 200 à 4 000 parties par million (sur la base du poids du polyéthylène linéaire) d’un polyéthylène glycol.

**3.** Procédé selon la revendication 1 ou 2, dans lequel le polyéthylène linéaire comprend de l’oxyde de zinc ; ou dans lequel le polyéthylène linéaire comprend de l’hydrotalcite.

4. Procédé selon l'une quelconque des revendications 1 à 3, dans lequel le polyéthylène linéaire est le LLDPE.

5. Procédé selon la revendication 4, dans lequel le LLDPE présente un indice de fusion $I_2$ de 0,1 à 5,0 grammes par 10 minutes ; ou

   dans lequel le LLDPE présente une densité comprise entre 0,910 et 0,936 g/$cm^3$ ; ou
   dans lequel le LLDPE est un copolymère d'éthylène comprenant de l'éthylène polymérisé et une ou plusieurs alpha-oléfines choisies dans le groupe constitué de 1-butène, de 1-hexène et de 1-octène.

6. Procédé selon l'une quelconque des revendications 1 à 5, dans lequel le copolymère de poly(éther-bloc-amide) comprend des blocs de polyamide qui sont des blocs de polyamide-12 (PA-12) et des blocs de polyéther qui sont des blocs de polyéthylène glycol (PEG).

7. Procédé selon la revendication 6, dans lequel les blocs de polyamide-12 (PA-12) représentent environ 40 à 50 pour cent en poids du copolymère de poly(éther-bloc-amide), et les blocs de polyéthylèneglycol (PEG) représentent environ 60 à 50 pour cent en poids du copolymère de poly(éther-bloc-amide).

8. Procédé selon l'une quelconque des revendications 1 à 5, dans lequel le copolymère de poly(éther-bloc-amide) comprend de 10 à 20 blocs de polyamide et de 10 à 20 blocs de polyéther.

9. Procédé selon l'une quelconque des revendications 1 à 5, dans lequel le copolymère de poly(éther-bloc-amide) comprend de 10 à 20 blocs de polyamide qui sont des blocs de polyamide-12 (PA-12) et de 10 à 20 blocs de polyéther qui sont des blocs de polyéthylèneglycol (PEG).

10. Procédé selon l'une quelconque des revendications 1 à 6, dans lequel le copolymère de poly(éther-bloc-amide) présente une masse moléculaire moyenne en nombre, Mn, d'environ 50 000 à environ 75 000 g/mole.

11. Procédé selon l'une quelconque des revendications 1 à 10, dans lequel le polymère de polycaprolactone est un polymère de polycaprolactone diol, avec une masse moléculaire moyenne en nombre Mn d'environ 500 g/mol à environ 6 000 g/mol et qui est dérivé d'epsilon-caprolactone en utilisant un 1,4-butanediol comme initiateur.

12. Procédé selon l'une quelconque des revendications 1 à 11, dans lequel la composition thermoplastique comprend de 200 à 2 000 parties par million (sur la base du poids du polyéthylène linéaire) du copolymère de poly(éther-bloc-amide).

13. Procédé selon l'une quelconque des revendications 1 à 12, dans lequel la composition thermoplastique comprend de 200 à 2 000 parties par million (sur la base du poids du polyéthylène linéaire) du polymère de polycaprolactone.

14. Procédé selon l'une quelconque des revendications 1 à 13, dans lequel le procédé d'extrusion à l'état fondu est effectué à un taux de cisaillement qui produirait un extrudat de composition thermoplastique présentant des défauts de fracture à l'état fondu s'il était réalisé en utilisant une composition thermoplastique constituée essentiellement du polyéthylène linéaire.

15. Procédé de préparation d'un extrudat de composition thermoplastique, le procédé comprenant les étapes consistant à :

   a) préparer une composition thermoplastique en combinant un polyéthylène linéaire avec 200 à 4 000 parties par million d'au moins un copolymère de poly(éther-bloc-amide) (sur la base du poids du polyéthylène linéaire) et de 200 à 4 000 parties par million (sur la base du poids du polyéthylène linéaire) d'au moins un polymère de polycaprolactone ; et
   b) extruder la composition thermoplastique dans un processus d'extrusion à l'état fondu ;
   dans lequel le polyéthylène linéaire est choisi dans le groupe constitué du LLDPE, du MDPE, du VLDPE, du HDPE et de mélanges de ceux-ci ;
   dans lequel le au moins un copolymère de poly(éther-bloc-amide) comprend des blocs de polyamide et des blocs de polyéther ;
   dans lequel la composition thermoplastique est substantiellement exempte de polymères fluorés ; et
   dans lequel le procédé d'extrusion à l'état fondu est effectué en l'absence de polymères fluorés.

**16.** Procédé de préparation d'un extrudat de composition thermoplastique, le procédé comprenant les étapes consistant à :

a) préparer une composition thermoplastique en combinant un polyéthylène linéaire avec 200 à 4 000 parties par million d'au moins un copolymère de poly(éther-bloc-amide) (sur la base du poids du polyéthylène linéaire), de 200 à 4 000 parties par million (sur la base du poids du polyéthylène linéaire) d'au moins un polymère de polycaprolactone et de 200 à 4 000 parties par million (sur la base du poids du polyéthylène linéaire) d'au moins un polyéthylène glycol ; et
b) extruder la composition thermoplastique dans un processus d'extrusion à l'état fondu ;
dans lequel le polyéthylène linéaire est choisi dans le groupe constitué du LLDPE, du MDPE, du VLDPE, du HDPE et de mélanges de ceux-ci ;
dans lequel le au moins un copolymère de poly(éther-bloc-amide) comprend des blocs de polyamide et des blocs de polyéther ;
dans lequel la composition thermoplastique est substantiellement exempte de polymères fluorés ; et
dans lequel le procédé d'extrusion à l'état fondu est effectué en l'absence de polymères fluorés.

**17.** Procédé selon la revendication 15 ou la revendication 16, dans lequel le polyéthylène linéaire comprend de l'oxyde de zinc ; ou
dans lequel le polyéthylène linéaire comprend de l'hydrotalcite.

FIGURE 1

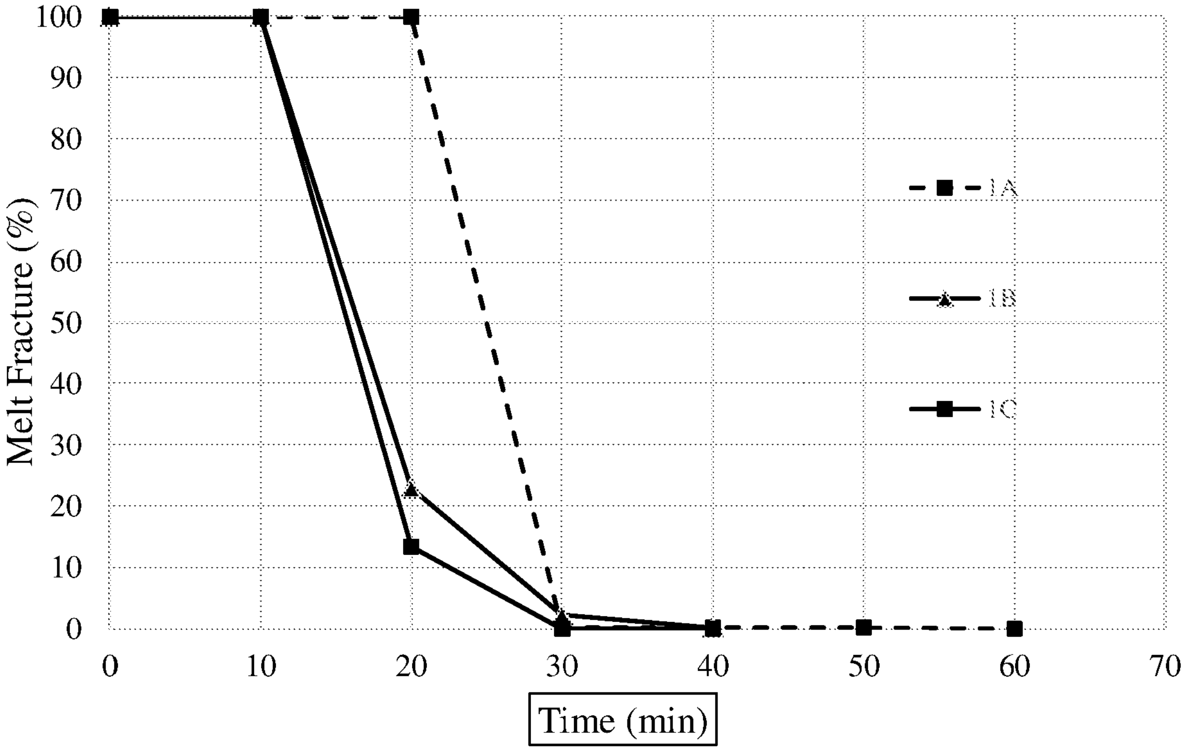
100
90
80
70
60
50
40
30
20
10
0
Melt Fracture (%)
0
10
20
30
40
50
60
70
Time (min)
1A
1B
1C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3125547 A
- US 3222314 A
- US 4013622 A
- US 4540538 A
- US 4855360 A
- US 5015693 A
- US 6294604 B
- US 5986005 A
- US 6894118 B
- US 7449520 B
- US 20050070644 A
- US 10982079 B
- EP 1600475 A1
- US 2968649 A
- US 3051677 A
- US 3318854 A
- US 5710217 A
- US 6277919 B
- US 7375157 B
- US 20100311906
- US 4331786 A
- US 4115475 A
- US 4195015 A
- US 4839441 A
- US 4864014 A
- US 4230838 A
- US 4332920 A
- US 8231950 B
- US 3169945 A
- US 4751112 A
- US 3645992 A
- US 4076698 A
- US 5272236 A
- US 5278272 A
- US 5582923 A
- US 5733155 A
- US 5589555 A
- US 8563637 B
- US 5981636 A
- US 6465551 B
- US 6599971 B
- US 5342868 A
- WO 2015042561 A
- WO 2015042563 A
- WO 2015042562 A
- WO 2011050042 A


### Non-patent literature cited in the description


- Thermoplastic Poly(Ether-b-Amide) Elastomers: Synthesis. **MALET, F. L. G.** The Handbook of Condensation Thermoplastic Elastomers. WILEY-VCH Verlag GmbH & Co. KGaA, 2005, 243-262
- Poly(Ether-b-Amide) Thermoplastic Elastomers: Structure, Properties, and Applications. **EUSTACHE, R. P.** The Handbook of Condensation Thermoplastic Elastomers. WILEY-VCH Verlag GmbH & Co. KGaA, 2005, 263-281
- **LABET M** ; **THIELEMANS W.** Synthesis of polycaprolactone: a review. *Chemical Society Reviews*, December 2009, vol. 38 (12)
- Polyethylene, Low Density. **KIRK-OTHMER** ; **NORMA MARASCHIN**. Encyclopedia of Chemical Technology. 18 March 2005
- *CHEMICAL ABSTRACTS*, 6683-19-8
- *CHEMICAL ABSTRACTS*, 2082-79-3
- *CHEMICAL ABSTRACTS*, 939402-02-5
- *CHEMICAL ABSTRACTS*, 119345-01-06
- *CHEMICAL ABSTRACTS*, 491589-22-1